(19) **Europäisches Patentamt European Patent Office Office européen des brevets**

(11) **EP 4 760 629 A1**

(12) **EUROPEAN PATENT APPLICATION**
published in accordance with Art. 153(4) EPC

(43) Date of publication:
17.06.2026 Bulletin 2026/25

(21) Application number: 24851624.7

(22) Date of filing: 25.07.2024

(51) International Patent Classification (IPC):
*G06T 1/00* (2006.01)    *G06T 1/40* (2006.01)
*H04N 1/58* (2006.01)

(52) Cooperative Patent Classification (CPC):
**G06T 1/00; G06T 1/20; H04N 1/58**

(86) International application number:
PCT/JP2024/026638

(87) International publication number:
WO 2025/033199 (13.02.2025 Gazette 2025/07)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 09.08.2023 JP 2023130362

(71) Applicant: HITACHI HIGH-TECH CORPORATION
Tokyo 105-6409 (JP)

(72) Inventors:
• **HATTORI, Hideharu**
 **Tokyo 100-8280 (JP)**
• **KAKISHITA, Yasuki**
 **Tokyo 100-8280 (JP)**
• **OBARA, Takayuki**
 **Tokyo 105-6409 (JP)**
• **MAESHIMA, Muneo**
 **Tokyo 105-6409 (JP)**

(74) Representative: **Strehl & Partner mbB**
**Maximilianstrasse 54**
**80538 München (DE)**

(54) **IMAGE PROCESSING DEVICE, IMAGE IDENTIFICATION SYSTEM, AND IMAGE PROCESSING METHOD**

(57) A device stores a corrector that creates a reconstituted image from an inputted image in accordance with a set parameter. The adjustment of the set parameter is performed such that a first reconstituted image created by the corrector from an inputted first image and a second image that is the same object as the first image and differs from the first image in color tone are brought close in shape to each other. The device creates a reconstituted image of the target image by inputting the target image to the corrector. The creation of a reconstituted image of the object image by a corrector is performed such that, in accordance with a set parameter, a feature amount is extracted from an inputted image, the extracted feature amount is corrected, and the reconstituted image of the object image is created from the corrected feature amount.

FIG. 4

EP 4 760 629 A1

**Description**

Incorporation by Reference

This application claims priority based on Patent Application 2023-130362 filed in Japan on August 9, 2023, and the entire contents of the application are incorporated herein by reference.

Technical Field

The present invention relates to an image processing technique, for example, an image processing technique that detects, with high accuracy, a specified object contained in an image by suppressing the difference in color and brightness of an imaged image.

Background Art

Recently, in an image recognition technique, the study of an image recognition technique that uses machine learning or the like has been made. Further, a technique that makes color and brightness of an image uniform has been studied. To correct color irregularities in an image, for example, there has been known a technique proposed in patent literature 1. In this patent literature 1, a color leveling filter is adopted as a parameter used in image processing thus reducing color irregularities of an image that expresses a biological substance.

Citation List

Patent Literature

Patent Literature 1: WO2017/150194

Summary of Invention

Technical Problem

However, in Patent Literature 1, in a case where color irregularities of an image is reduced using a color leveling filter, there exists a case where color irregularities still remain or an artifact of color occurs in an image after correction. That is, a drawback remains that it is not always the case that color irregularities in an image is reduced. Further, in Patent Literature 1, in a case where an object in an image after color irregularities correction is identified by an identifier, there exists a drawback identification accuracy of the identifier is lowered. Solution to Problem

An image processing system according to an embodiment of the present invention includes: one or more processors; and one or more memories. The one or more memories each stores a corrector that creates a reconstituted image from an inputted image in accordance with a set parameter, adjustment of the set parameter is performed such that a first reconstituted image created by the corrector from an inputted first image and a second image that is directed to the same object as the first image and has a different color tone are brought close in shape to each other, and the processor inputs an object image to the corrector and creates a reconstituted image of the object image. The corrector, in accordance with the set parameter: extracts a feature amount from the inputted object image; corrects the extracted feature amount; and creates the reconstituted image of the object image from the corrected feature amount.

A learning system according to an embodiment of the present invention includes: one or more processors; and one or more memories. The one or more memories each stores a corrector that creates a reconstituted image from an inputted image in accordance with a set parameter, the one or more processors perform the adjustment of the set parameters. In the adjustment, a first image is created by giving perturbation to a second image, the first reconstituted image is created by inputting the first image to the corrector, the second reconstituted image is created by inputting the second image to the corrector, the set parameter is adjusted so as to reduce a cost calculated from a predetermined loss, and the loss includes a difference between the first reconstituted image and the second image and a difference between the second reconstituted image and the second image.

Further features concerning the present invention will be clarified from the content of this description and the accompanying drawings. The embodiment of the present invention is achieved by elements and combinations of various elements, and the following detailed description and aspects of the accompanying claims.

The content of this description merely shows typical examples and is not intended to limit the claims or application examples of the present invention in any sense. Advantageous Effects of Invention

According to the present invention, even in a case where the difference in color and brightness exists between images, by creating the reconstituted image that suppresses the difference in color and brightness of the image and, further, by automatically creating the color and brightness corrector that creates the reconstituted image that suppresses the difference in color and brightness of the object image by machine learning, it is possible to identify an object (for example, an abnormal tissue or the like) in the image with high accuracy without changing the identifier.

Brief Description of Drawings

Fig. 1 is a block diagram illustrating a function of an image processing device at the time of learning according to a first embodiment.
Fig. 2 is a block diagram illustrating a hardware configurational example of the image processing device according to the first embodiment or an image processing device according to a second embodiment.
Fig. 3 is a block diagram illustrating a color and brightness corrector at learning in the first embodiment.
Fig. 4 is a block diagram illustrating a function of an image processing device at evaluation according to the first embodiment.
Fig. 5A is a view illustrating one example of an operation of a color and a brightness feature extraction unit.
Fig. 5B is a view illustrating one example of an operation of a color and a brightness feature extraction unit.
Fig. 6A is a view illustrating one example of an operation of a color and a brightness feature correction unit.
Fig. 6B is a view illustrating one example of an operation of a color and a brightness feature correction unit.
Fig. 7 is a view illustrating one example of an operation of an image reconstitution unit.
Fig.8 is a view illustrating one example of an operation of an image reconstitution unit.
Fig. 9 is a block diagram showing the color and brightness corrector at evaluation according to the first embodiment.
Fig. 10 is a view illustrating one example of an operation of the feature extraction unit.
Fig. 11 is a view illustrating one example of an operation of the feature extraction unit.
Fig. 12 is a view illustrating one example of an operation of an identification unit.
Fig. 13 is a view illustrating one example of an operation of an identification unit.
Fig. 14 is a view illustrating one example of an operation of an output unit.
Fig. 15 is a view illustrating one example of an operation of an output unit.
Fig. 16A is a view illustrating one example of an operation of an output unit.
Fig. 16B is a view illustrating one example of an operation of an output unit.
Fig. 17 is a flowchart illustrating an entire operation at the time of learning of the image processing device according to the first embodiment.
Fig. 18 is a flowchart illustrating an entire operation at an evaluation time of the image processing device according to the first embodiment.
Fig. 19 is a block diagram illustrating a function of the image processing device at the time of learning according to the second embodiment.
Fig. 20A is a block diagram illustrating a color and brightness corrector at the time of learning according to the second embodiment.
Fig. 20B is a block diagram illustrating a color and brightness corrector at the time of learning according to the second embodiment.
Fig. 21A is a view illustrating one example of an operation of a color and brightness feature extraction and correction unit.
Fig. 21B is a view illustrating one example of an operation of the color and brightness feature extraction and correction unit.
Fig. 22A is a view illustrating one example of an operation of the color and brightness feature extraction and correction unit.
Fig. 22B is a view illustrating one example of an operation of the color and brightness feature extraction and correction unit.
Fig. 23 is a flowchart illustrating an entire operation at the time of learning of the image processing device 2 according to the second embodiment.
Fig. 24 is a block diagram illustrating a function of the image processing device at an evaluation time according to the second embodiment.
Fig. 25 is a flowchart illustrating an entire operation at an evaluation time of the image processing device according to the second embodiment.
Fig. 26 is a view illustrating the schematic configuration of an image processing system on which the image processing device is mounted.
Fig. 27 is a view illustrating the schematic configuration of an image processing system on which the image processing device is mounted.

Description of Embodiments

Hereinafter, embodiments of the present invention will be described with reference to the accompanying drawings. In the drawings, functionally identical elements may be represented by the same numerals. Although the drawings show specific embodiments and implementation examples in accordance with the principles of the present invention, they are for the understanding of the present invention and are by no means to be used to interpret the disclosure in a restrictive manner.

Although the embodiments have been described in sufficient detail to enable those skilled in the art to practice the present invention, it should be understood that other implementations and configurations are possible, and that changes in structure and substitution of various elements are possible without departing from the scope and spirit of the technical idea of the present invention. Therefore, the following description should not be construed as being limited to this.

Further, as described later, the embodiments of the present invention may be implemented by a software that is executed on a general-use computer, by a dedicated hardware, or by a combination of a software and a hardware.

Hereinafter, respective processing according to the embodiments of the present invention will be described using "respective processing units (for example, in identification unit and the like) as programs" are used as a subject (an operation subject). However, the programs perform predetermined processing by performing a processor (CPU or the like) using a memory or a communication port (communication control device) and hence, the description may be made using the processor as the subject.

In one embodiment of this specification, a color and brightness corrector that suppresses difference in color and brightness between images at the time of learning is prepared, a reconstituted image that suppresses difference in color and brightness of an object image using the color and brightness corrector at evaluation is created, and an object in the reconstituted image is detected. Accordingly, without changing an identifier, the identification of an object (for example, abnormal tissues or the like) in an image can be realized with high accuracy.

According to one embodiment of this specification, at the time of learning, while a perturbation image is automatically created from an object image, parameters of a color and brightness corrector constituted of a color and brightness feature extraction unit, a color and brightness feature correction unit and an image reconstitution unit are updated. At the time of evaluating the image, a reconstituted image that suppresses difference in a color and brightness of an image to be evaluated using the color and brightness corrector prepared at learning is created, and a feature amount of reconstituting image is extracted and identified thus providing an image processing method that realizes the identification of an object in an image with high accuracy.

The image processing device according to one embodiment in the present specification performs: processing of extracting a feature amount in color and brightness between images at the time of performing machine learning; processing of correcting a feature amount of difference in color and brightness; processing of preparing a reconstituted image based on the corrected feature amount; and processing of generating a color and brightness corrector that automatically creates the reconstituted image where difference in color and brightness is suppressed from an object image by performing machine learning. At the time of performing evaluation, processing of automatically creating the reconstituted image where difference in color and brightness is suppressed from the object image using the color and brightness corrector prepared at the time of performing machine learning and extracting a feature amount of the reconstituted image, and processing of identifying an object in the reconstituted image from a feature amount of the calculated reconstituted image are performed.

(1) First Embodiment

<Functional configuration of identification unit formation device>

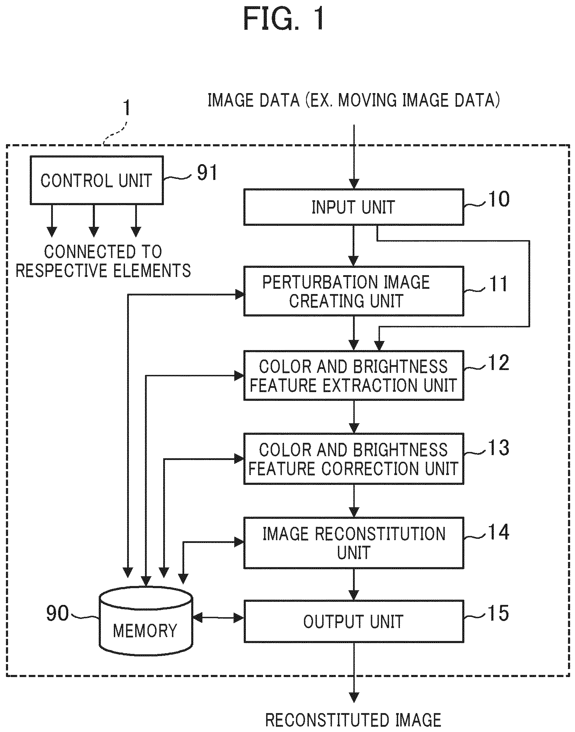

Fig. 1 is a block diagram illustrating the functional configuration of an image processing device according to an embodiment of the present invention at the time of performing machine learning. An image processing device 1 includes an input unit 10, a perturbation image creating unit 11, a color and brightness feature extraction unit 12, a color and brightness feature correction unit 13, an image reconstitution unit 14, an output unit 15, a control unit 91, and a memory 90. The image processing device 1 may be implemented in an image acquisition device, or may be implemented in a server connected to the image acquisition device via network as illustrated later (third and fourth embodiments). The image processing device 1 may be implemented in one or a plurality of calculator, or may be implemented in a cloud. In this manner, the image processing device 1 can be implemented in a system that includes one or more processors and one or more memories (storage device).

In the image processing device 1, the perturbation image creating unit 11, the color and brightness feature extraction unit 12, the color and brightness feature correction unit 13, the image reconstitution unit 14, and the output unit 15 may be realized by one or more processors that execute programs, or may be realized by a modular hardware.

Image data is inputted into the input unit 10. For example, the input unit 10 may obtain coded still image data, WSI and the like coded in a JPG format, a Jpeg 2000 format, a PNG format, a BMP format or the like that are imaged at a predetermined interval by imaging means such as a camera built in the image processing device 1, and may use such an image as an inputted image. Further, the input unit 10 extracts still image data of frames at a predetermined interval from motion image data in a Motion JPEG, MPEG, H. 264, HD/SDI format or the like, and may use such an image as an inputted image.

Further, the input unit 10 may use, as an inputted image, an image obtained by imaging means via a bus, a network or the like. Further, the input unit 10 may use an image that is already stored in a detachable recording medium as an inputted image. An image inputted from the input unit 10 is outputted to the perturbation image creating unit 11 and the color and brightness feature extraction unit 12.

The perturbation image creating unit 11 creates a perturbation image by perturbating a value of an inputted image. As a perturbation method, a perturbation image is created by perturbating a $\gamma$ value, a R value, a B value, a G value and the like. The perturbation image creating unit 11 sets ranges where the respective values are perturbated in advance such that an artifact is not generated, determines values within such a range at random thus creating a plurality of perturbation images. Machine learning uses one or more inputted images, and a plurality of perturbation images created from the respective inputted images.

The color and brightness feature extraction unit 12 calculates, from the inputted image and perturbation images, color and brightness feature amounts (values of respective parameters) and output values to respective layers of a network (for example, Convolutional Neural Network or the like) that constitutes the color and brightness feature extraction unit 12.

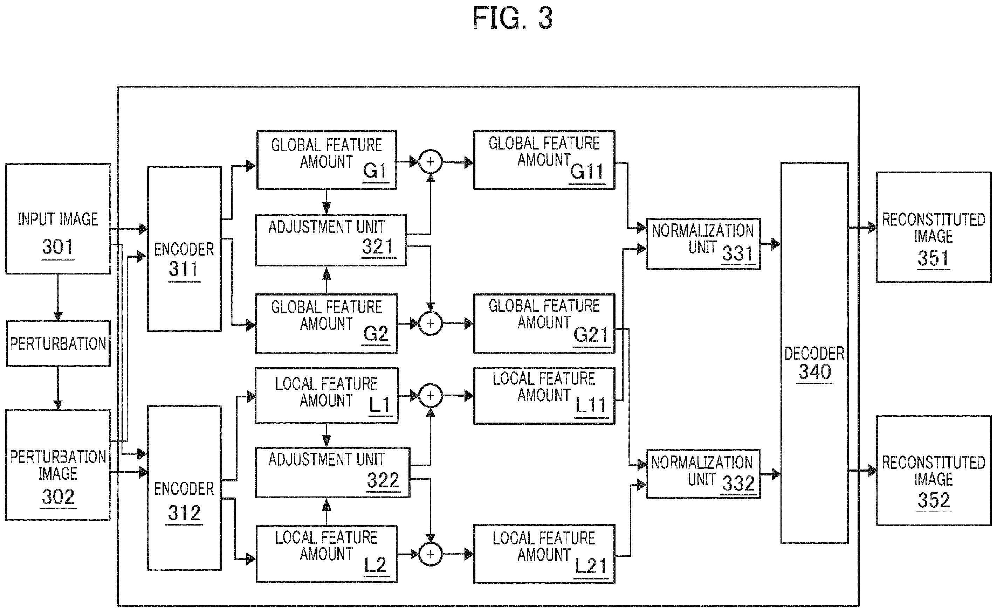

Fig. 3 is one example of a block diagram illustrating a functional configuration of the color and brightness corrector at the time of performing machine learning. The color and brightness feature extraction unit 12 corresponds to encoders 311, 312 illustrated in Fig. 3. In the encoder 311, a global feature amount G1 is extracted from an inputted image 301. Further, a global feature amount G2 is extracted from the perturbation image 302. In the encoder 312, a local feature amount L1 is extracted from the inputted image 301. Further, a local feature amount L2 is extracted from the perturbation image 302. The global feature amount is a feature amount that represents color and brightness of the entire image and, for example, a feature amount of $1 \times 1 \times$ several hundred dimensions. A size of the global feature amount is smaller than a size of an image. On the other hand, the local feature amount is a feature amount that expresses a shape in the image, and is a feature amount having the same size as the image. In this example, the feature amounts of two sizes are extracted. However, the feature amounts of three or more different sizes may be extracted. By extracting the feature amounts having different sizes, color and brightness of the image can be corrected more appropriately. The number of kinds of feature amounts may be one.

The color and brightness feature correction unit 13 is constituted of an adjustment unit 321, an adjustment unit 322, a normalization unit 331, and a normalization unit 332. The adjustment unit 321 corrects the global feature amount G1 and the global feature amount G2 such that the global feature amount G1 and the global feature amount G2 after correction are brought close to each other, thus obtaining a global feature amount G11 and a global feature amount G21 respectively. Further, the adjustment unit 322 corrects the local feature amount L1 and the local feature amount L2 such that the local feature amount L1 and the local feature amount L2 are brought close to each other thus obtaining a local feature amount L11 and a local feature amount L21 respectively. The normalization unit 331 normalizes the global feature amount G11 by the local feature amount L11 thus calculating a post normalization feature amount. Further, the normalization unit 332 normalizes the global feature amount G21 by the local feature amount L21 thus calculating the post normalization feature amount.

The image reconstitution unit 14 corresponds to a decoder 340 in Fig. 3, and creates a reconstituted image 351 from a post normalization feature amount obtained by the color and brightness feature correction unit 13. Further, the image reconstitution unit 14 creates a reconstituted image 352 from a post normalization feature amount obtained by the color and brightness feature correction unit 13. In learning the color and brightness corrector using machine leaning, for example, learning is performed by calculating loss values such that the inputted image 301 and the reconstituted image 351 are brought close in shape to each other, the inputted image 301 and the reconstituted image 352 are brought close in shape to each other, the global feature amount G11 and a global feature amount G21 are brought close to each other, and the local feature amount L11 and the local feature amount L21 are brought close to each other, and encoders 311, 312, adjustment units 321, 322, the normalization units 331, 332 and the decoder 340 are formed.

The output unit 15 displays a reconstructed image and loss values, cost values and the like that the prepared color and brightness corrector outputs by an output device (a display or the like). The output unit 15 stores information such as the reconstructed image and information such as values calculated by the color and brightness corrector, and respective units ranging from the color and brightness feature extraction unit 12 to the image reconstitution unit 14 in the memory 90.

The control unit 91 is realized by a processor, and is connected to respective elements in the image processing device 1. Operations of the respective elements of the image processing device 1 are performed by an autonomous operation of the above-mentioned respective elements or are performed by an instruction from the control unit 91.

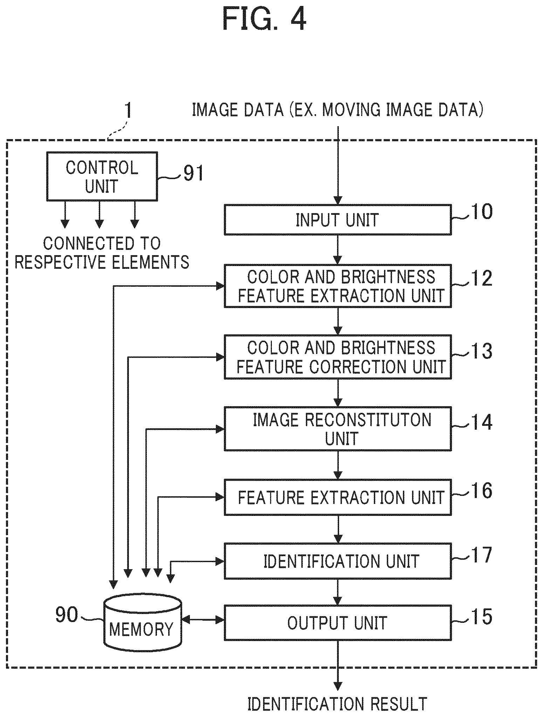

Fig. 4 is a block diagram illustrating the functional configuration of the image processing device 1 according to the embodiment of the present invention at the time of performing the evaluation. The image processing device 1 includes the input unit 10, the color and brightness feature extraction unit 12, the color and brightness feature correction unit 13, the image reconstitution unit 14, a feature extraction unit 16, an identification unit 17, the output unit 15, the control unit 91, and the memory 90. The image processing device 1 may be implemented in an image processing device in an image acquisition device or, as described later (a third embodiment and a fourth embodiment), the image processing device 1 may be implemented in a server that is connected with the image acquisition device via a network. The image processing device 1 may be implemented in one or a plurality of calculators, or may be implemented in a cloud. In this manner, the image processing device 1 can be implemented in a system that includes one or more processors and one or more memories (storage device).

In the image processing device 1, the color and brightness feature extraction unit 12, the color and brightness feature correction unit 13, the image reconstitution unit 14, the output unit 15, the feature extraction unit 16, and the identification unit 17 may be realized by a processor that executes a program, or may be realized by a hardware formed into a module.

Hereinafter, the respective processing units that differ from the processing units illustrated in Fig. 1 are described. Values of the respective parameters of the color and brightness feature corrector prepared at the time of learning are read by the memory 90, and the respective parameters of the color and brightness feature extraction unit 12, the color and brightness feature correction unit 13, and the image reconstitution unit 14 are set.

With respect to the image inputted from the input unit 10, a reconstituted image where the difference in color and brightness is suppressed is created using the color and brightness feature extraction unit 12, the color and brightness feature correction unit 13, and the image reconstitution unit 14.

In advance, to identify an object and an object in an inputted image, for example, to identify a normal tissue and cell from a normal tissue and cell, or to identify an abnormal tissue and cell from an abnormal tissue and cell in an inputted image, machine learning is performed, and identifiers (respective parameters (filter coefficient, offset value and the like) of the feature extraction unit 16 and the identification unit 17 necessary for identification) are prepared from the learned image.

From the memory 90, the values of the respective parameters (filter coefficient, offset value and the like) of a network (for example, convolutional neural network or the like) of the identifier constituted of the feature extraction unit 16 and the identification unit 17 formed by performing machine learning in advance are read, thus setting respective parameters of the feature extraction unit 16 and the identification unit 17.

The feature extraction unit 16 calculates output values of respective layers of the network (for example, convolutional neural network or the like) that constitutes the feature amount and the feature extraction unit from the inputted image. The identification unit 17 receives an output value of a final layer of the network of the feature extraction unit 16, and calculates an identification result of the identifier. The output unit 15 displays an identification result on an output device (a display or the like), and stores the identification result in the memory 90. The control unit 91 is realized by a processor, and is connected to respective elements in the image processing device 1. Operations of the respective elements of the image processing device 1 are performed by an autonomous operation of the above-mentioned respective elements or are performed by an instruction from the control unit 91.

In this manner, in the image processing device 1 according to the embodiment, at the time of performing machine learning, while creating a perturbation image using the learned image, the respective parameters of the color and brightness corrector constituted of the color and brightness feature extraction unit 12, the color and brightness feature correction unit 13, and the image reconstitution unit 14 are updated, thus forming the color and brightness corrector that suppresses difference in color and brightness of an image. Further, at the time of performing evaluation, the respective parameters of the color and brightness corrector and the identifier prepared in advance are read, a reconstituting image that suppresses the difference in color and brightness of an evaluation image is created using the color and brightness corrector, and the reconstituting image is identified using the identifier thus enabling the identification of an object (for example, an abnormal tissue or the like) in the image with high accuracy.

<Hardware configuration of image processing device>

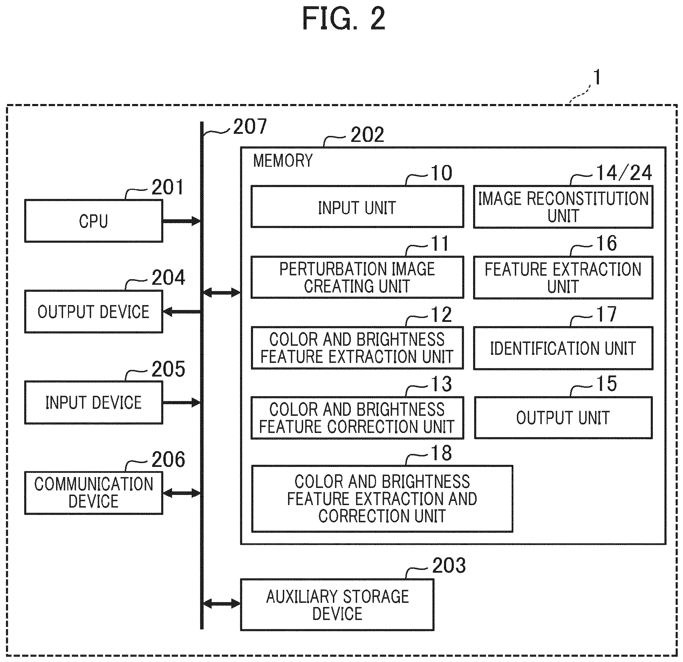

Fig. 2 is a view illustrating a hardware configurational example of the image processing device 1 according to the embodiment of the present invention. The image processing device 1 includes: a CPU (processor) 201 that performs various programs; a memory 202 that stores various programs; a storage device (corresponding to the memory 90) 203 that stores various data; an output device 204 that outputs a reconstituting image, a color and brightness corrector, an identification result, loss values at the time of performing machine learning and the like; an input device 205 for inputting instructions, images and the like from a user; and a communication device 206 that performs communication with other devices. These constitutional elements are connected with each other by a bus 207.

CPU 201, when necessary, reads various programs from the memory 202, and performs these programs. The memory 202 stores as the programs, the input unit 10, a perturbation image creating unit 11, the color and brightness feature extraction unit 12, the color and brightness feature correction unit 13, the image reconstitution unit 14, the feature extraction unit 16, the identification unit 17, and the output unit 15.

An auxiliary storage device 203 stores: a learned image; an evaluation image; respective parameters of the color and brightness corrector and a reconstituting image generated by the color and brightness feature extraction unit 12, the color and brightness feature correction unit 13, and the image reconstitution unit 14; the respective parameters (filter coefficient, offset value and the like), an identification result and an identified value of an identifier formed of the feature extraction unit 16 and the identification unit 17; and display information generated by the output unit 15 and the like.

The output device 204 is constituted of a device such as a display, a printer, or a speaker. For example, the output device 204 displays data generated by the output unit 15 on a display screen. The input device 205 is constituted of devices such as a keyboard, a mouse, and a microphone. Instructions (including decision on inputting respective images) by a user are inputted to the image processing device 1 by the input device 205.

In the image processing device 1, the communication device 206 is not an indispensable constitutional element. In a case where a communication device is included in a personal computer or the like connected to an image acquisition device, the image processing device 1 may not hold the communication device 206. The communication device 206, for example receives data (including image, color and brightness corrector and the like) transmitted from another device (for example, a server) connected via network, and performs an operation of storing data in the storage device 203.

The image processing device according to this embodiment forms the color and brightness corrector that creates a reconstituting image where difference in color and brightness is suppressed by extracting and correcting a color and brightness feature amount using a perturbation image at the time of performing learning. Further, at the time of performing evaluation, the image processing device according to this embodiment creates a reconstituting image from an evaluation image using the color and brightness corrector, and identifies the reconstituting image using the identifier thus identifying an object (for example an abnormal tissue or the like) in the image with high accuracy.

<Constitutions and operation of respective units>

Hereinafter, the constitutions and manners of operation of the respective elements at the time of performing machine learning are described.

(i) Perturbation image creating unit 11

A perturbation image is created by perturbating a value of an inputted image. As a perturbation method, a perturbation image is created by perturbating a $\gamma$ value, a R value, a B value, a G value (gradation levels) and the like. For example, the $\gamma$ value is increased 1.4 times, the R value is added with 3 with respect to the entire image, and the B value is subtracted by 5 with respect to the entire image, thus creating a perturbation image. To prevent the generation of an artifact, ranges that the respective values are perturbated are set in advance (for example, range of 0.5 times to 1.5 times with respect to the y value), the values are decided at random within the range, thus creating the perturbation image.

In this manner, by changing a specific value of an inputted image, it is possible to create an image which is the same object as the inputted image but differs in color tone. The created image differs from the inputted image in color tone partially or over the entire region. Images in large variations can be efficiently created by perturbation. Images having different color tones are images that differ in color and brightness. An image that differs in color tone from an inputted image may be created by a method that differs from a method of generating a perturbation image obtained by artificially adding small disturbance or displacement to the inputted image. For example, these images can be created by changing a dyeing liquid or illumination light.

(ii) Color and brightness feature extraction unit 12

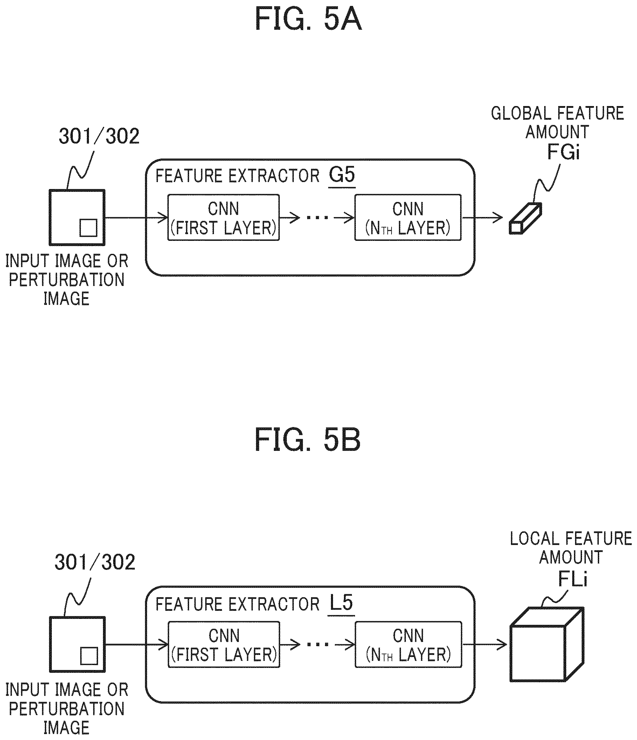

A color and brightness feature amount of an inputted image is obtained. As one example, an example where a color and brightness feature amount (a global feature amount, a local feature amount) are obtained is illustrated in Fig. 5A and in Fig. 5B. CNN in Fig. 5A and in Fig. 5B expresses convolutional neural network.

For example, as illustrated in Fig. 5A, a feature extractor G5 obtains a global feature amount FGi of color and brightness of the inputted image 301 or a perturbation image 302 from the inputted image 301 or the perturbation image 302 based on the following formula (1). Further, as illustrated in Fig. 5B, a feature extractor L5 obtains a local feature amount FLi of color and brightness of the inputted image 301 or the perturbation image 302 from the inputted image 301 or the perturbation image 302 based on the formula (2).

A filter coefficient wgj indicated in the formula (1) is, for example, a coefficient obtained by machine learning such that the reconstituted image 351 reconstituted from the inputted image 301 is brought close in shape to the inputted image 301 and, at the same time, a reconstituted image 352 reconstituted from a perturbation image 302 is brought close in shape to the inputted image 301.

In the formula (1), pgj indicates a pixel value, bgi indicates an offset value, q indicates the number of a filter coefficient, and h indicates a nonlinear function. As illustrated in Fig. 5A, using the formula (1), a feature amount fgi of an arbitrary filter i is obtained by obtaining a calculation result of the respective filters with respect to a left upper side to a right lower side of the target image. For example, a matrix of the feature amount fgi obtained by the feature extractor G5 is set as a global feature amount FGi of the inputted image 301 or the perturbation image 302.

[Formula 1]

$$fgi = h(\sum_{j=1}^{q} (pgj \times wgj) + bgi)$$

$$\dots \quad (1)$$

A filter coefficient wlj indicated in the formula (2) is a coefficient obtained by machine learning such that the reconstituted image 351 reconstituted from the inputted image 301 is brought close in shape to the inputted image 301 and, at the same time, the reconstituted image 352 reconstituted from the perturbation image 302 is brought close in shape to the inputted image 301.

In the formula (2), plj indicates a pixel value, bli indicates an offset value, r indicates the number of filter coefficient, and h indicates a nonlinear function. As illustrated in Fig. 5B, using the formula (2), a feature amount fli of an arbitrary filter i is obtained by obtaining a calculation result of the respective filters with respect to a left upper side to a right lower side of the target image. For example, a matrix of the feature amount fli obtained by the feature extractor G5 is set as a local feature amount FLi of the inputted image 301 or the perturbation image 302.

[Formula 2]

$$fli = h(\sum_{j=1}^{r} (plj \times wlj) + bli)$$

$$\dots \quad (2)$$

(iii) color and brightness feature correction unit 13

The color and brightness feature correction unit 13 is constituted of adjustment units 321, 322 and normalization units 331, 332. The adjustment unit 321 obtains a filter coefficient wdj indicated in the formula (3) by machine learning such that a post correction feature amount of a global feature amount FGi (a global feature amount G1) of the inputted image 301 and a post correction feature amount of a global feature amount FGi (a global feature amount G2) of the perturbation image 302 are brought close in shape to each other.

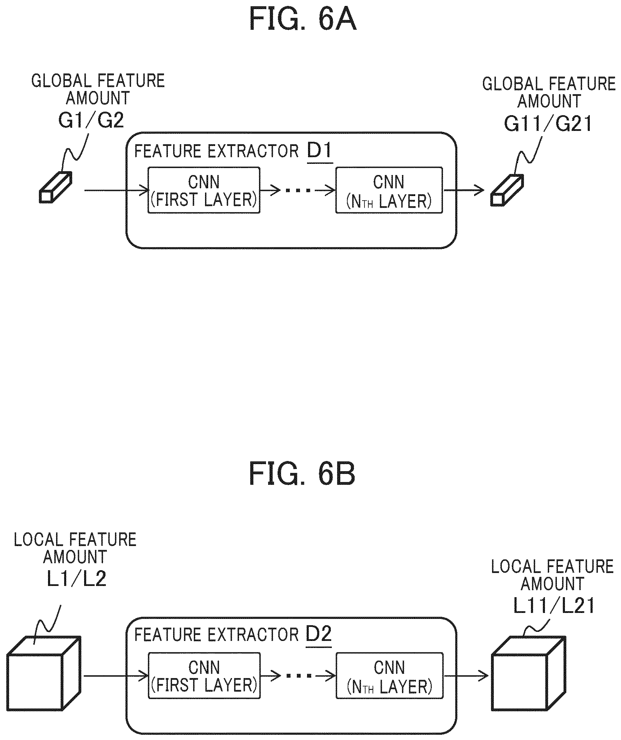

In the formula (3), pdj indicates a value of a global feature amount, bdi indicates an offset value, s1 indicates the number of filter coefficient, and h indicates a nonlinear function. As illustrated in Fig. 6A, using the formula (3), a feature amount fdi of an arbitrary filter i is obtained by obtaining a calculation result of the respective filters with respect to the global feature amounts G1, G2. For example, a matrix of the feature amount fdi obtained from the global feature amount G1 by a feature extractor D1 is set as a global feature amount G11, and a matrix of the feature amount fdi obtained from the global feature amount G2 by the feature extractor D1 is set as a global feature amount G21. Alternatively, a matrix obtained by adding the global feature amount G1 and a corrected feature amount fdi obtained from the global feature amount G1 by the feature extractor D1 to each other is set as the global feature amount G11, and a matrix obtained by adding the global feature amount G2 and a corrected feature amount fdi obtained from the global feature amount G2 by the feature extractor D1 to each other is set as the global feature amount G21.

[Formula 3]

$$fdi = h(\sum_{j=1}^{s1} (pdj \times wdj) + bdi)$$

$$\dots \quad (3)$$

The adjustment units 322 obtains a filter coefficient wej indicated in the formula (4) by machine learning such that a post correction feature amount of a local feature amount FLi (a local feature amount L1) of the inputted image 301 and a post correction feature amount of a local feature amount FLi (a local feature amount L2) of the perturbation image 302 are brought close in shape to each other.

In the formula (4), pej indicates a value of a local feature amount, bei indicates an offset value, s2 indicates the number of filter coefficient, and h indicates a nonlinear function. As illustrated in Fig. 6B, using the formula (4), a feature amount fei of an arbitrary filter i is obtained by obtaining a calculation result of the respective filters with respect to the local feature amounts L1, L2. For example, a matrix of the feature amount fei obtained from the local feature amount L1 by a feature extractor D2 is set as a local feature amount L11, and a matrix of the feature amount fei obtained from the local feature amount L2 by the feature extractor D2 is set as a local feature amount L21. Alternatively, a matrix obtained by adding the local feature amount L1 and a corrected feature amount fei obtained from the local feature amount L1 by the feature extractor D2 to each other is set as the local feature amount L11, and a matrix obtained by adding the local feature amount L2 and a feature amount fei obtained from the local feature amount L2 by the feature extractor D2 to each other is set as the local feature amount L21.

[Formula 4]

$$fei = h(\sum_{j=1}^{s2}(pej \times wej) + bei)$$

$$\cdots \quad (4)$$

The normalization unit 331, as indicated in the formula (5), normalizes the global feature amount G11. In the formula (5), FG indicates a global feature amount G11, and $FG_{max}$ indicates a maximum value of the global feature amount G11. On the other hand, $FL_{max}$ indicates a maximum value of the local feature amount L11. Accordingly, the global feature amount G11 is corrected to a global feature amount G111 using the formula (5).

[Formula 5]

$$FG = FG/FG_{max}$$
$$FG = FG * FL_{max}$$

$$\cdots \quad (5)$$

The normalization unit 332, as indicated in the formula (5), normalizes the global feature amount G21. In the formula (5), FG indicates a global feature amount G21, and $FG_{max}$ indicates a maximum value of the global feature amount G21. On the other hand, $FL_{max}$ indicates a maximum value of the local feature amount L21. Accordingly, the global feature amount G21 is corrected to a global feature amount G211 using the formula (5).

The global feature amount G111 and the local feature amount L11 are set together to make a post normalization feature amount NFI. Further, the global feature amount G211 and the local feature amount L21 are set together to make a post normalization feature amount NF2.

(iv) Image reconstitution unit 14

The image reconstitution unit 14, using the decoder 340, generates the reconstituted image 351 from the post normalization feature amount NFI, and generates a reconstituted image 352 from the post normalization feature amount NF2. As illustrated in Fig. 6 and expressed in the formula (6), a global feature amount G1111 is generated by copying x that is the global feature amount G111 from a left upper side to a right lower side such that a vertical size and a lateral size of the x become equal to a vertical size and a lateral size of the local feature amount L11, and the global feature amount G1111 and the local feature amount L11 are connected thus forming a post correction color and brightness feature amount CF1.

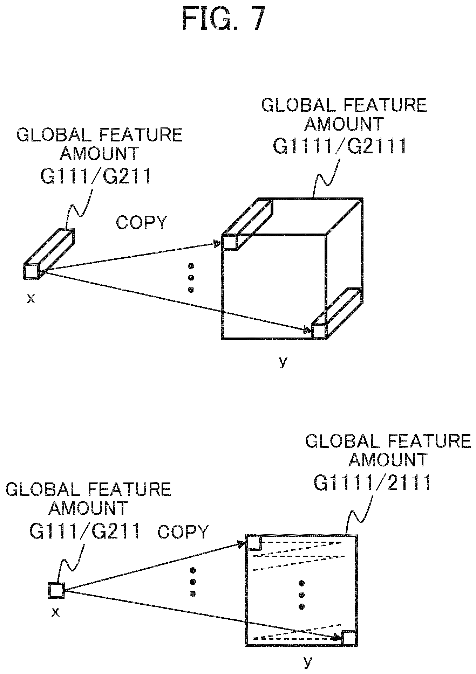

Further, as illustrated in Fig. 7 and expressed in the formula (6), a global feature amount G2111 is generated by copying x that is the global feature amount G211 from a left upper side to a right lower side such that a vertical size $H_y$ in a vertical direction and a lateral size $W_y$ in a horizontal direction of the x become equal to a vertical size $H_y$ in a vertical direction and a lateral size $W_y$ in a horizontal direction of the local feature amount L21, and the global feature amount G2111 and the local feature amount L21 are connected thus forming a post correction color and brightness feature amount CF2.

[Formula 6]

$$y_{i,j} = x_{0,0} \ (0 \le i < W_y, 0 \le j < H_y)$$

$$\cdots \quad (6)$$

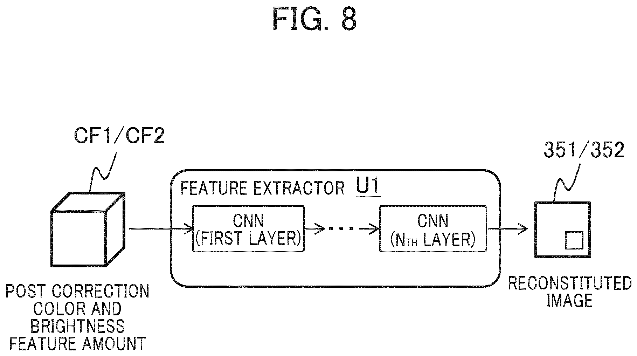

The decoder 340 obtains a filter coefficient wpj that is indicated in the formula (7) by machine learning or the like such that the inputted image 301 and the reconstituted image 351 that is reconstituted based on the post correction color and brightness feature amount CF1 are brought close in shape to each other. In the formula (7), ppj indicates a value of a post correction color and brightness amount CF1, bpi indicates an offset value, t1 indicates the number of a filter coefficient, and h indicates a nonlinear function. As illustrated in Fig. 8, using the formula (7), a feature amount fpi of an arbitrary filter i is obtained by obtaining a calculation result of the respective filters with respect to the post correction color and brightness feature amount CF1. For example, the reconstituted image 351 is created based on a matrix of the feature amount fpi obtained by a feature extractor U1 from the post correction color and brightness feature amount CF1. For example, the reconstituted image 351 may be created by multiplying the feature amount fpi by 255.

[Formula 7]

$$fpi = h(\sum_{j=1}^{t1} (ppj \times wpj) + bpi)$$

$$\dots \quad (7)$$

Further, the decoder 340 obtains the filter coefficient wpj that is indicated in the formula (7) by machine learning or the like such that the inputted image and the reconstituted image 2 that is reconstituted based on the post correction color and brightness feature amount CF2 are brought close in shape to each other.

In the formula (7), ppj indicates a post correction color and brightness feature amount CF2, bpi indicates an offset value, t1 indicates the number of a filter coefficient, and h indicates a nonlinear function. As illustrated in Fig. 8, using the formula (7), a feature amount fpi of an arbitrary filter i is obtained by obtaining a calculation result of the respective filters with respect to the post correction color and brightness feature amount CF2. For example, the reconstituted image 2 is created based on a matrix of the feature amount fpi obtained by a feature extractor U1 from the post correction color and brightness feature amount CF2. For example, the reconstituted image 352 may be created by multiplying the feature amount fpi by 255.

In generating the color and brightness corrector by machine learning, the respective parameters (respective filter coefficients, respective offset values and the like) from the formula (1) to the formula (7) are calculated such that an overall cost indicated by a formula (12) formed by combining four loss values indicated in the formula (8) to the formula (12) is reduced. MSE indicates a mean square error, Input indicates an inputted image 301, Output 1 indicates the reconstituted image 351, Output 2 indicates a reconstituted image 352, Feature G11 indicates a global feature amount G11, Feature G21 indicates a global feature amount G21, Feature L11 indicates a local feature amount L11, and Feature L21 indicates a local feature amount L21.

[Formula 8]

$$loss_{re} = \text{MSE(Input, Output1)}$$

$$\dots \quad (8)$$

[Formula 9]

$$loss_{re\_p} = \text{MSE(Input, Output2)}$$

$$\dots \quad (9)$$

[Formula 10]

$$loss_g = \text{MSE(FeatureG11, FeatureG21)}$$

$$\dots \quad (10)$$

[Formula 11]

$$loss_l = \text{MSE(FeatureL11, FeatureL21)}$$

$$\dots \quad (11)$$

[Formula 12]

$$\text{cost} = loss_{re} + loss_{re\_p} + loss_g + loss_l$$

$$\dots \quad (12)$$

(v) output unit 15

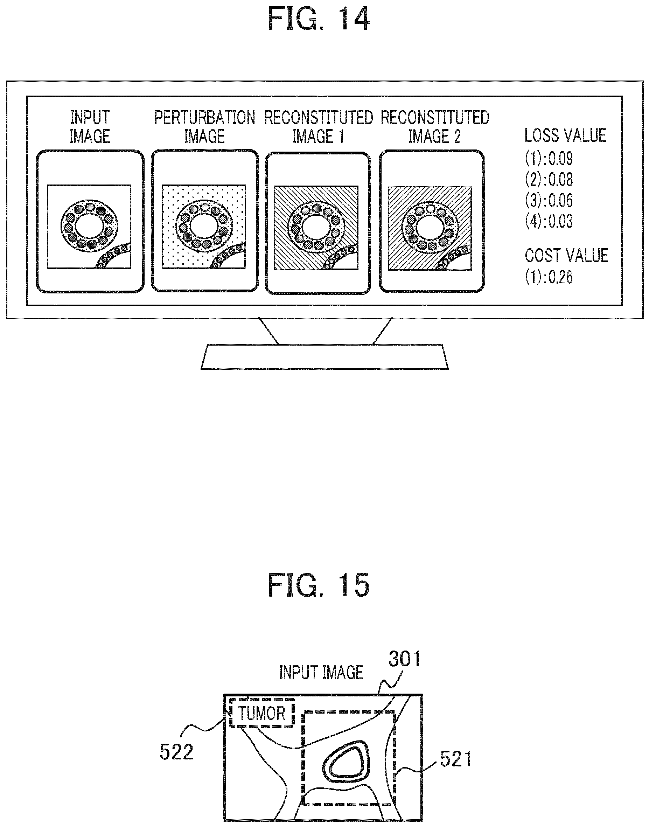

The output unit 15, in generating the color and brightness corrector at the time of performing machine learning, displays, as an example, an inputted image, a perturbation image, reconstituted images 1 and 2 of the inputted image and the perturbation image, respective loss values and a cost value by a graphical user interface (GUI) illustrated in Fig. 14.

In the example illustrated in Fig. 14, the inputted image, the perturbation image, the reconstituted images 1 and 2, four loss values (0.09, 0.08, 0.06, 0.03) and the cost value 0.26 are displayed.

The output unit 15 stores, in the memory 90, the inputted images (learned image and the like), the respective parameters (film coefficient, weighting, offset values and the like) of the color and brightness corrector constituted of the color and brightness feature extraction unit 12, the color and brightness feature correction unit 13 and the image reconstitution unit 14, the reconstituting units 1 and 2, display information generated by the output unit 15, and the like.

<Constitutions and operation of respective units>

Hereinafter, configurations and operations of the respective elements at the time of evaluation are described in detail.

(i) Input unit 10

The inputted image (object image) 301 for evaluation is outputted to the color and brightness feature extraction unit 12.

(ii) Color and brightness feature extraction unit 12

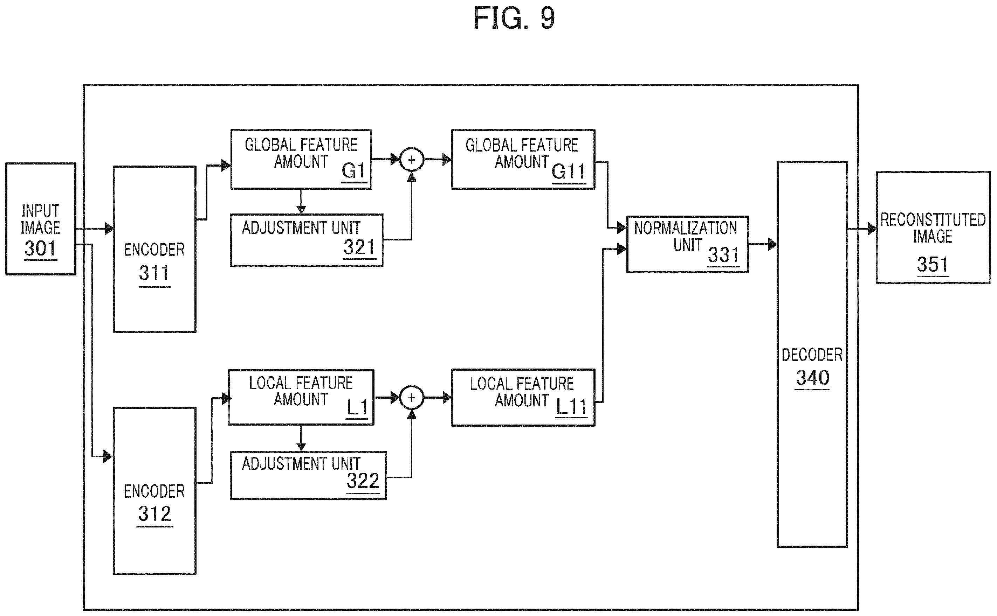

Using the color and brightness feature extraction unit 12 of the color and brightness corrector illustrated in Fig. 9 that is prepared at the time of performing machine learning, a global feature amount FGi of the inputted image 301 and a local feature amount FLi of the inputted image are calculated.

(iii) color and brightness feature correction unit 13

Using the color and brightness feature correction unit 13 of the color and brightness corrector illustrated in Fig. 9 that is prepared at the time of performing machine learning, in the adjustment unit 321, a global feature amount G11 is calculated from a global feature amount G1. In the adjustment unit 322, a local feature amount L11 is calculated from a local feature amount L1. The normalization unit 331 corrects the global feature amount G11 to a global feature amount G111. The global feature amount G111 and the local feature amount L11 are set together to make a post normalization feature amount NFI.

(iv) Image reconstitution unit 14

Using the decoder 340 of the image reconstitution unit 14 of the color and brightness corrector illustrated in Fig. 9 generated at the time of performing machine learning, the reconstituted image 351 is generated from the post normalization feature amount NF1.

(v) Feature extraction unit 16

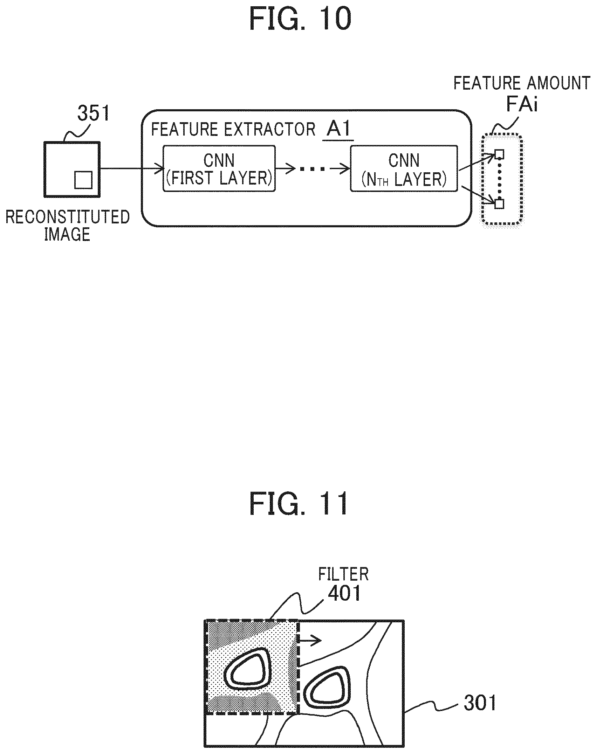

A feature amount of the reconstituted image 351 is obtained. An example of obtaining the feature amount is illustrated in Fig. 10. In Fig. 10, CNN expresses a convolutional neural network.

For example, using the feature extractor A1, based on the formula (13), a feature amount FAi of an object (for example, a tissue, a cell or the like) in the reconstituted image 351 is obtained from the reconstituted image 351.

A filter coefficient wj indicated in the formula (13) is a coefficient obtained by machine learning or the like to identify an object other than an object to be detected from an object other than the object to be detected (for example, to identify a normal tissue and a normal cell from a normal tissue and a normal cell or the like) or to identify an object to be detected from an object to be detected (for example, to identify an abnormal tissue and an abnormal cell from an abnormal tissue and an abnormal cell, or the like).

In the formula (13), pj indicates a pixel value of the reconstituted image 1, bi indicates an offset value, m indicates the number of filter coefficients, and h indicates a nonlinear function. As illustrated in Fig. 11, by obtaining a calculation result of the respective filters 401 from a left upper side to a right lower side of an inputted image 301 that is an object image (for example, histopathological image) using the formula (13), a feature amount fi of an arbitrary filter I is obtained. For example, a matrix of the feature amount fi obtained by the feature extractor A1 is set as a feature amount FAi of the inputted image 301. The manner of forming the feature extractor A1 is described with respect to the identification unit 17 described later.

[Formula 13]

$$fi = h(\sum_{j=1}^{m} (pj \times wj) + bi)$$

$$... \quad (13)$$

(vi) Identification unit 17

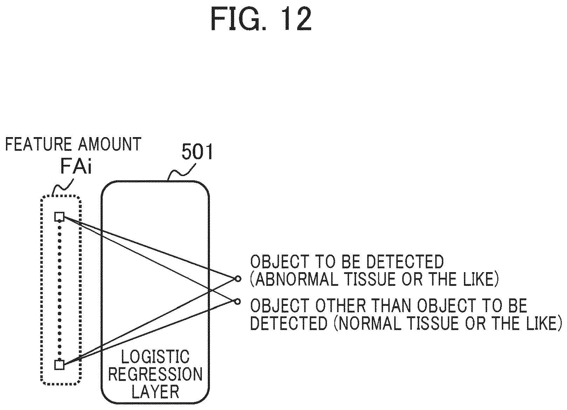

As illustrated in Fig. 12, using the feature amount Fai (matrix f) of the feature extractor A1 obtained by the feature extraction unit 16, the identification unit 17 calculates a value of likeliness of an object to be detected (likeliness of an abnormal tissue, likeliness of lesion or the like) by logistic regression processing at a logistic regression layer 501 using a formula (14), and determines whether an object (for example, a tissue, a cell) in the inputted image 301 is an object to be detected (an abnormal tissue or the like) or an object other than the object to be detected (a normal tissue or the like). In formula (14), w indicates a low of weighting, b indicates an offset value, g indicates a nonlinear function and y indicates an identification result respectively. Weighting w and the offset value b are obtained by machine learning using a learning image in advance. Further, using weighting w and the offset value b obtained at the time of performing learning, an object image is identified, and an identification result y is calculated.

[Formula 14]

$$y = g(w \times f + b)$$

$$... \quad (14)$$

The identification unit 17, based on the formula (14), when an object in the inputted reconstituted image 351 is an object other than the object to be detected, for example, it is determined that the object is an object other than the object to be detected in logistic regression processing at the logistic regression layer 501, for example, using a known technique on machine learning, a feature amount of an object is learned using the feature extraction unit 16.

The reconstituted image 351 is, for example, a HE dye image, an object to be detected is, for example, an object to identify an abnormal tissue and an abnormal cell from an abnormal tissue and an abnormal cell or the like, and an object other than the object to be detected is, for example, an object to identify a normal tissue and a normal cell from a normal tissue and a normal cell, or the like.

Further, an object in the inputted image is an object to be detected, a feature amount of the object is learned using the feature extraction unit 16 such that the object in the inputted image is determined as an object to be detected by logistic regression processing. For example, as a technique of machine learning, a convolutional neural network may be also used.

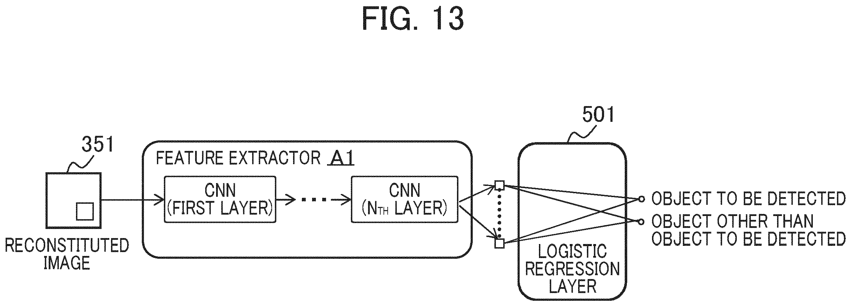

As illustrated in Fig. 13, the identification unit 17 forms the feature extractor A1 that calculates a feature amount fi (referred to as FAi) of the reconstituted image 351 such that at the time of performing machine learning, by machine learning, using the reconstituted image 351, an object to be detected is determined as the object to be detected and an object other than the object to be detected is determined as an object other than the object to be detected. The generation of the feature extractor A1 is performed using the feature extraction unit 16 as expressed in the formula (13) and the formula (14).

In the identification unit 17, a plurality of learning images are used at the time of learning, operations in the feature extraction unit 16 and the identification unit 17 are repeatedly carried out. Weighting w, a filter coefficient value wj, and offset values b, bi indicated in the formula (13) and the formula (14) are obtained to generate the feature extractor A1 that calculates a feature amount FAi of the reconstituted image 351 from the reconstituted image 351 using the feature extraction unit 16. Further, the identification unit 17 calculates an identification result of the reconstituted image 351 using the feature extractor A1.

The identification unit 17 stores the respectively obtained weighting w, filter coefficient wj, offset values b, bi in the memory 90.

(vii) Output unit 15

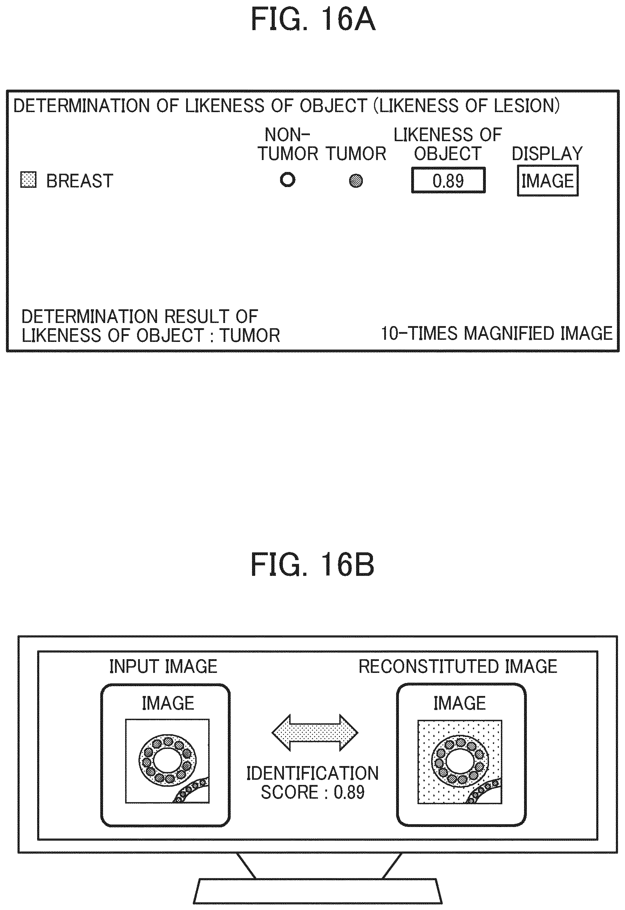

The output unit 15, using an identification result y that the identification unit has obtained, displays a result of the determination on likeliness of an object (for example, determination of likeliness of a lesion) on a graphical user interface (GUI) illustrated in Fig. 16A and Fig. 16B as an example.

Fig. 16A illustrates an example of a case of a breast, and is a view illustrating a classification result of non-tumor and a tumor (an abnormal tissue, an abnormal cell or the like). The example illustrated in Fig. 16A is an example where, with respect to a breast, the identification unit 17 classifies that the inputted reconstituted image 1 includes a tumor having an abnormal tissue or cell, and a value of likeliness of the tumor is calculated as 0.89.

Fig. 16B is a view illustrating one example of a display when an image button is pressed in Fig. 16A. Fig. 16B is an example that displays an inputted image, a reconstituted image that is formed by reconstituting the inputted image by the color and brightness corrector, and an identification score.

Further, an inputted image (an object image) 301 is inputted to the output unit 15 from the input unit 10. In a case where an identification result of each identifier is displayed, when an object in the image is determined to be an object (for example, an abnormal tissue or abnormal cell), as illustrated in Fig. 15, to indicate a portion of the object to be detected (for example, a portion where the existence of an abnormal tissue or abnormal cell is suspected), a detection frame 521 may be depicted in the inputted object image 301. On the other hand, the object in the image is determined to be a normal tissue or a normal cell, the detection frame 521 is not depicted in the inputted object image, and the inputted object image may be displayed as it is. Further, as illustrated in Fig. 15, a result 522 which is a likeliness of a determined object (for example, a tumor) is displayed.

The output unit 15 stores, in the memory 90, an inputted image respective parameters (a filter coefficient, weighting, an offset value and the like) of the color and brightness corrector constating of the color and brightness feature extraction unit 12, the color and brightness feature correction unit 13 and the image reconstitution unit 14, a reconstituted image, respective parameters of the identifiers (a filter coefficient, weighting, an offset value and the like) formed of the feature extraction unit 16 and the identification unit 17, identification result, identification value, display information generated by the output unit 15, and the like.

<Steps of processing performed by image processing device>

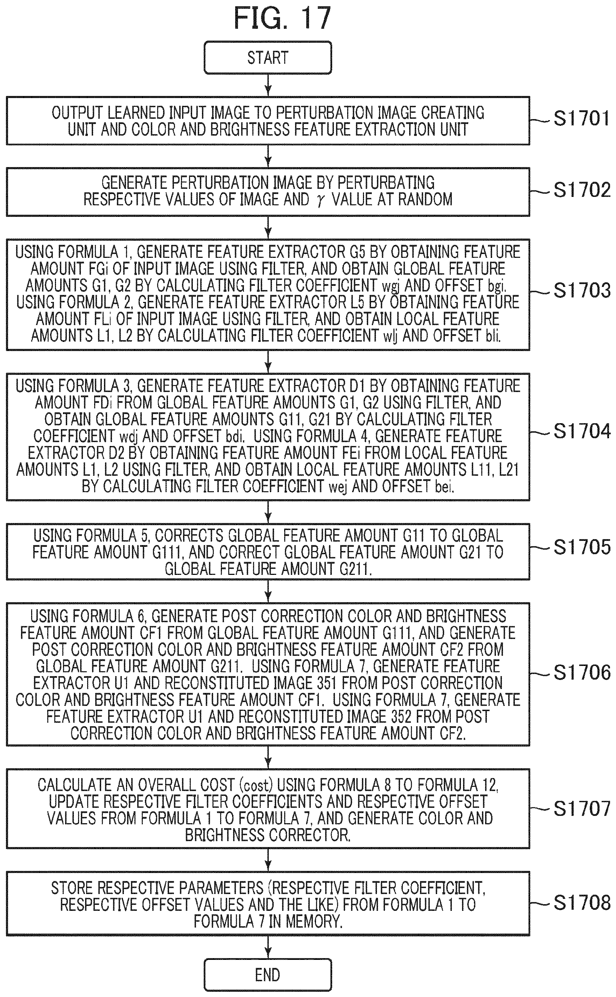

Fig. 17 is a flowchart for describing an operation of the image processing device 1 according to the embodiment at the time of performing machine learning. Hereinafter, although the description is made by setting the respective processing units (the input unit 10, the color and brightness feature extraction unit 12 and the like) as operation subjects. However, the processing step of the image processing device may be replaced such that the CPU 201 functions as an operation subject, and the CPU 201 performs the respective processing unit as a program.

(i) Step 1701

The input unit 10 receives a learned image, and outputs the inputted image to the perturbation image creating unit 11 and the color and brightness feature extraction unit 12.

(ii) Step 1702

The perturbation image creating unit 11 creates a perturbation image by perturbating respective values (R value, G value, B value and the like), of an image and, a $\gamma$ value and the like at random.

(iii) Step 1703

The color and brightness feature extraction unit 12, by performing machine learning, obtains a global feature amount $FG_i$ of plurality of inputted images 301 for learning using a filter based on the above-mentioned formula (1), and forms the feature extractor G5 by repeating updating of parameters of the feature extractor. A filter coefficient $wg_i$ and offset value $bg_i$ are obtained with respect to the feature amount $FG_i$. Accordingly, a global feature amount G1 is obtained from the inputted image 301, and a global feature amount G2 is obtained from the perturbation image 302.

Further, the color and brightness feature extraction unit 12, by machine learning, obtains a local feature amount $FL_i$ of the inputted image 301 using a filter based on the above-mentioned formula (2), and forms the feature extractor L5. A filter coefficient $wl_j$ and an offset value $bl_i$ with respect to a feature amount $FL_i$ are obtained. Accordingly, the local feature amount L1 is obtained from the inputted image 301, and a local feature amount L2 is obtained from the perturbation image 302.

(iv) Step 1704

The adjustment unit 321 of the color and brightness feature correction unit 13 obtains, by machine learning, a feature amount FDi from the global feature amounts G1, G2 using a filter based on the above-mentioned formula (3), and forms the feature extractor D1. A filter coefficient wdj, and an offset value bdi are obtained with respect to the feature amount FDi. Accordingly, the global feature amount G11 is obtained from the global feature amount G1, and the global feature amount G21 is obtained from the global feature amount G2.

Further, the adjustment unit 322 of the color and brightness feature correction unit 13 obtains, by machine learning, a feature amount FEi from the local feature amounts L1, L2 using a filter based on the above-mentioned formula (4), and forms the feature extractor D2. A filter coefficient wej, and an offset value bei are obtained with respect to the feature amount FEi. Accordingly, the local feature amount L11 is obtained from the local feature amount L1, and the local feature amount L21 is obtained from the local feature amount L2.

(v) Step 1705

The normalization unit 331 of the color and brightness feature correction unit 13 corrects the global feature amount G11 to the global feature amount G111 based on the above-mentioned formula (5). Further, the normalization unit 332 of the color and brightness feature correction unit 13 corrects the global feature amount G21 to the global feature amount G211 based on the above-mentioned formula (5).

(vi) Step 1706

The image reconstitution unit 14 generates a global feature amount G1111 from the global feature amount G111 based on the above-mentioned formula (6), connects the global feature amount G1111 and the local feature amount L11 to each other thus generating a post correction color and brightness feature amount CF1. Further, the image reconstitution unit 14 generates a global feature amount G2111 from the global feature amount G211 based on the above-mentioned formula (6), connects the global feature amount G2111 and the local feature amount L21 to each other thus generating a post correction color and brightness feature amount CF2.

Further, the image reconstitution unit 14 obtains, by machine learning, a feature amount FPi from the post correction color and brightness feature amounts CF1 using a filter based on the above-mentioned formula (7), and forms the feature extractor U1. A filter coefficient wpj and an offset value bpi with respect to a feature amount FPi are obtained. Accordingly, the reconstituted image 351 is created from the post correction color and brightness feature amount CF1.

Further, the image reconstitution unit 14 obtains, by machine learning, a feature amount FPi from the post correction color and brightness feature amounts CF2 using a filter based on the above-mentioned formula (7), and forms the feature extractor U1. A filter coefficient wpj and an offset value bpi with respect to a feature amount FPi are obtained. Accordingly, the reconstituted image 352 is created from the post correction color and brightness feature amount CF2.

(vii) Step 1707

The color and brightness feature extraction unit 12, the color and brightness feature correction unit 13, and the image reconstitution unit 14 calculates an overall cost expressed in the formula (12) from the above-mentioned formula (8) to (11), updates the respective parameters (the respective filer coefficients, the respective offset values) from the above-mentioned formula (1) to formula (7) using machine learning so that the overall cost is reduced, and generates the color and brightness corrector.

(viii) Step 1708

The output unit 15 stores the respective parameters (respective filter coefficients, respective offset values, and the like) from the formula (1) to the formular (7) in the memory 90.

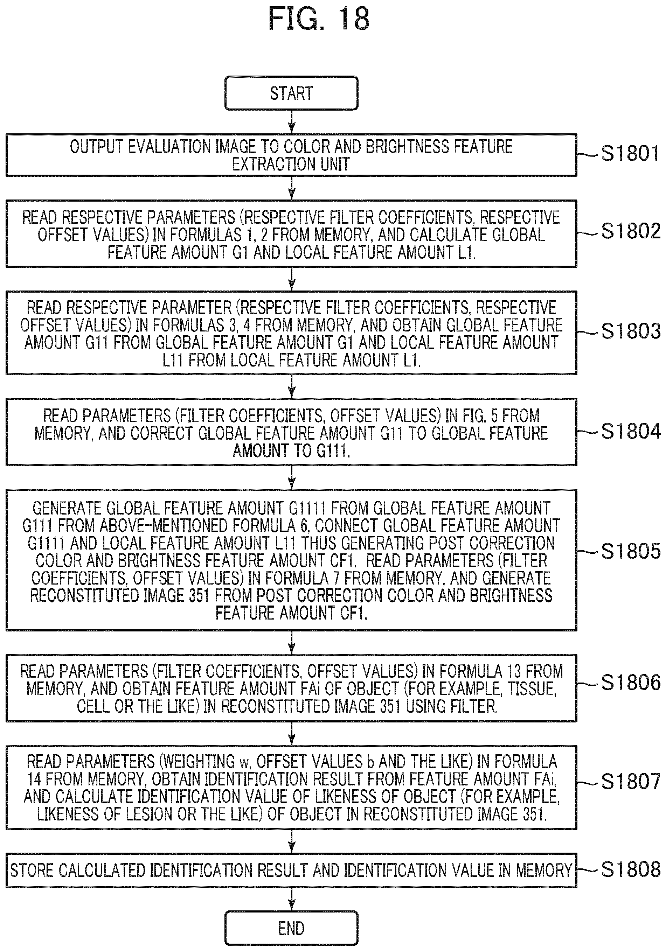

Fig. 18 is a flowchart for describing an operation at an evaluation time in the image processing device 1 according to the embodiment. Hereinafter, although the description is made by setting the respective processing units (the input unit 10, the color and brightness feature extraction unit 12 and the like) as operation subjects. However, the processing step of the image processing device may be replaced such that the CPU 201 functions as an operation subject, and the CPU 201 performs the respective processing unit as a program.

(i) Step 1801

The input unit 10 receives an evaluation image (also referred to as an inputted image or an object image), and outputs the evaluation image to the color and brightness feature extraction unit 12.

(ii) Step 1802

The color and brightness feature extraction unit 12 reads the respective parameters (respective filter coefficients, respective offset values) in the formula (1) and the formula (2) from the memory, and calculates the global feature amount G1 and the local feature amount L1.

(iii) Step 1803

The color and brightness feature correction unit 13 reads respective parameters (respective filter coefficients, respective offset values) in the formula (3) and the formula (4) from the memory, obtains a global feature amount G11 from a global amount G1, and obtains a local feature amount L11 from a local feature amount L1.

(iv) Step 1804

The color and brightness feature correction unit 13 reads the parameters (filter coefficients, offset values) in the formula (5) from the memory, and corrects the global feature amount G11 to a global feature amount G111.

(v) Step 1805

The image reconstitution unit 14 generates a global feature amount G1111 from the global feature amount G111 based on the above-mentioned formula (6), connects the global feature amount G1111 and the local feature amount L11 to each other thus generating a post correction color and brightness feature amount CF1.

Further, the image reconstitution unit 14 reads the parameters (filter coefficients, offset values) in the formula (7) from the memory, and creates the reconstituted image 351 from the post correction color and brightness feature amount CF1.

(vi) step 1806

The feature extraction unit 16 reads the parameters (filter coefficients, offset values) in the formula (13) from the memory, and obtains a feature amount FAi of an object (for example, a tissue, a cell or the like) of the reconstituted image 351 using a filter based on the above-mentioned formula (13).

(vii) step 1807

The identification unit 17 reads the parameters (weighting w, offset values b and the like) in the formula (14) from the memory, obtains an identification result from the feature amount Fai based on the formula (14), and calculates an identification value of object likeliness (for example, lesion or the like) of an object in the reconstituted image 351. The parameters read in the above-mentioned respective steps have been already adjusted by learning as described above.

(viii) step 1808

The output unit 15 stores the calculated identification result and identification value in the memory 90.

According to the first embodiment, at the time of performing machine learning, the color and feature amount is extracted and corrected while using the perturbation image, and forms the color and brightness corrector for creating the reconstituted image that suppresses a difference in color and brightness. Further, at the time of performing the evaluation, the reconstituted image is created from the evaluation image using the color and brightness corrector, and the reconstituted image is identified using the identifier. Accordingly, an object (for example, an abnormal tissue or the like) in the image can be identified with high accuracy. The processing of learning and evaluation in the color and brightness corrector according to the first embodiment may be performed by a calculation system that differs from an evaluation processing system and a learning system.

(2) Second Embodiment

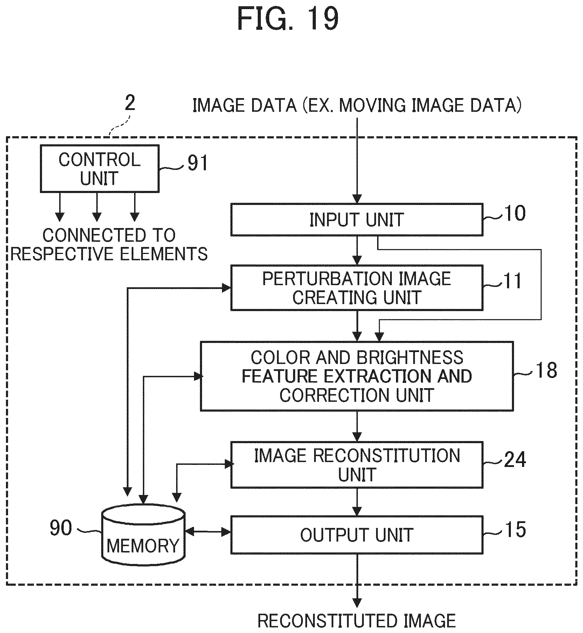

An image processing device 2 at the time of performing machine learning according to the second embodiment includes, as described in Fig. 19, many constitutional elements same as the elements in the image processing device 1 in Fig. 1 according to the first embodiment. However, the image processing device 2 according to the second embodiment differs from the first embodiment, the image processing device 2 according to the second embodiment includes neither the color and brightness feature extraction unit 12 nor the color and brightness feature correction unit 13 and, instead, includes a color and brightness feature extraction and correction unit 18 and an image reconstitution unit 24. Accordingly, hereinafter, the constitutional elements that differ from the elements in Fig. 1 will be mainly described.

In the image processing device 2 according to this embodiment, a color and brightness corrector is formed such that, at the time of performing machine learning, in two respective encoders, the extraction of a color and brightness feature amount and the correction of the color and brightness feature amount are performed, and a reconstituted image of an inputted image and a reconstituted image of a perturbation image are created from the corrected feature amount in the decoders. At the time of performing the evaluation, the reconstituted image is created from the evaluation image using the color and brightness corrector, and the reconstituted image is identified using the identifier and hence, an object (for example, an abnormal tissue or the like) in the image can be identified with high accuracy.

<Constitutions and operation of respective units>

Hereinafter, the constitutional elements and the manner of operation of the respective elements at the time of performing machine learning that are different from those illustrated in Fig. 1 are described in detail.

(i) color and brightness extraction and correction unit 18

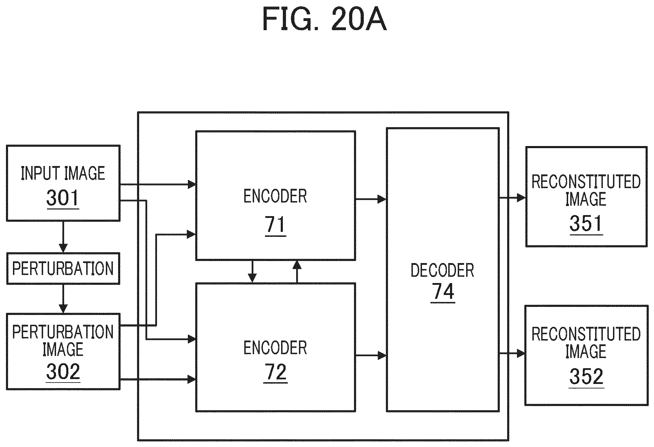

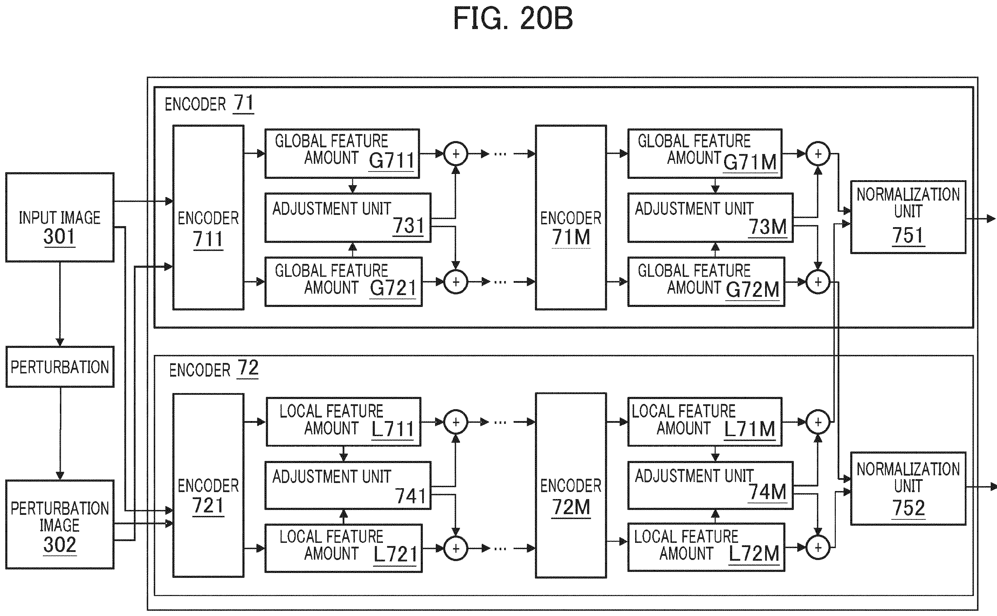

Fig. 20A and Fig. 20B illustrates a configurational example of a color and brightness feature extraction and correction unit 18. The color and brightness feature extraction and correction unit 18 includes an encoder 71 and an encoder 72. The encoder 71 includes encoders 711 to 71M, and adjustment units 731 to 73M. The encoder 72 includes encoders 721 to 72M, and adjustment units 741 to 74M. In this embodiment, M indicates an arbitrary natural number of 2 or more. The encoder 71 and the encoder 72 respectively includes a normalization unit 751 and a normalization unit 752 respectively.

The color and brightness feature extraction and correction unit 18 obtains a color and brightness feature amounts of an inputted image and, thereafter, corrects the color and brightness amounts. An example where the color and brightness features amounts (global feature amount, local feature amount) are obtained is illustrated in Fig. 20A and Fig, 20B. As the encoders and decoders illustrated in in Fig. 20A and Fig, 20B, CNN can be used.

For example, the encoder 711 obtains a global feature amount G711 from an inputted image 301, and obtains a global feature amount G721 from a perturbation image 302. The encoder 71M obtains a global feature amount G71M from the global feature amount of the inputted image 301 in a preceding stage. The encoder 71M obtains a global feature amount G72M from the global feature amount of the perturbation image 302 in a preceding stage.

The encoder 721 obtains a local feature amount L711 from the inputted image 301, and obtains a local feature amount L721 from the perturbation image 302. The encoder 72M obtains a local feature amount L71M from the local feature amount of the inputted image 301 in a preceding stage. The encoder 72M obtains a local feature amount L72M from the local feature amount of the perturbation image 302 in a preceding stage.

There exist two methods. In one method, a global feature amount G711N in a next stage is generated by adding an output of an adjustment unit 73 and the global feature amount G71. The other method is a method when an output of the adjustment unit 73 is set as the global feature amount G711N after correction as it is (the global feature amount G71N is not added). In both methods, an output of the adjustment unit 73N becomes the post correction global feature amount G711N. The substantially same description is also applied to the global feature amount G72 and, further, is also applicable to the adjustment unit 74N and the local feature amount L71N or L72N.

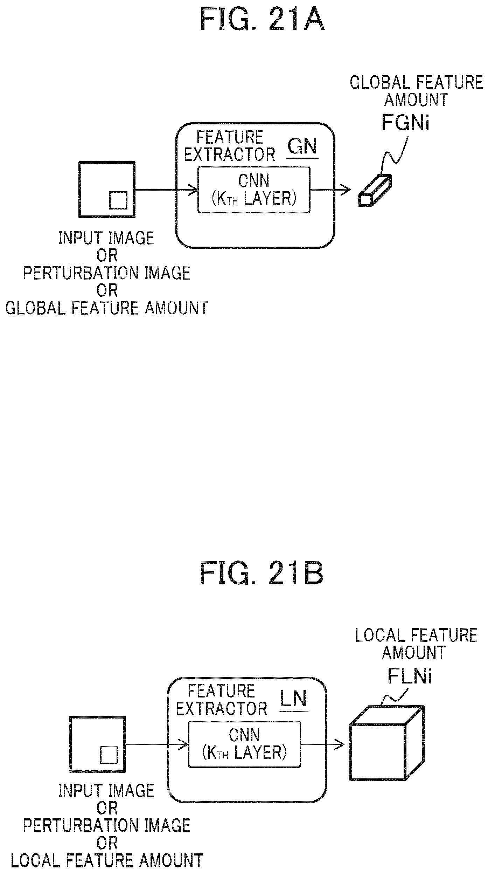

As illustrated in Fig. 21A, for example, the encoder 71N obtains a global feature amount FGNi of color and brightness from an inputted image, a perturbation image or a global feature amount based on the formula (15) using the feature extractor GN. N is any one of natural number from 1 to M. As illustrated in Fig. 21B, the encoder 72N obtains a local feature amount FLNi of color and brightness from an inputted image, a perturbation image or a local feature amount based on the formula (16) using the feature extractor LN.

A filer coefficient wgnj indicated in the formula (15) is a coefficient obtained by machine learning such that a reconstituted image that is reconstituted from an inputted image is brought close in shape to the inputted image and, at the same time, a reconstituted image that is reconstituted from a perturbation image is brought close in shape to the inputted image.

In formula (15), pgnj indicates a pixel value, bgni indicates an offset value, q is the number of a filter coefficient, and h indicates a nonlinear function. As illustrated in Fig. 21A, by obtaining calculation results of the respective filters from a left upper side to a right lower side of a target image using the formula (15), a feature amount fgni of an arbitrary filter I is obtained. For example, a matrix of the feature amount fgni obtained by the feature extractor GN is set as a global feature amount FGNi of an inputted image, a perturbation image or a global feature amount.

[formula 15]

$$fgni = h(\sum_{j=1}^{q}(pgnj \times wgnj) + bgni)$$

$$\dots \quad (15)$$

A filer coefficient wlnj indicated in the formula (16) is a coefficient obtained by machine learning such that a reconstituted image that is reconstituted from an inputted image is brought close in shape to the inputted image and, at the same time, a reconstituted image that is reconstituted from a perturbation image is brought close in shape to the inputted image.

In the formula (16), plnj indicates a pixel value, blni indicates an offset value, r indicates the number of filter coefficient, and h indicates a nonlinear function. As illustrated in Fig.21B, by obtaining calculation results of the respective filters from a left upper side to a right lower side of a target image using the formula (16), a feature amount flni of an arbitrary filter i is obtained. For example, a matrix of the feature amount flni obtained by the feature extractor LN is set as a local feature amount FLNi of an inputted image, a perturbation image or a local feature amount.

[Formula 16]

$$flni = h(\sum_{j=1}^{r}(plnj \times wlnj) + blni)$$

$$\dots \quad (16)$$

Next, the adjustment units 73N obtains a filter coefficient wdnj indicated in the formula (17) by machine learning or the like such so that a global feature amount FGNi (a global feature amount G71N) of the inputted image and a global feature amount FGNi (global feature amount G72N) of the perturbation image are brought close to each other.

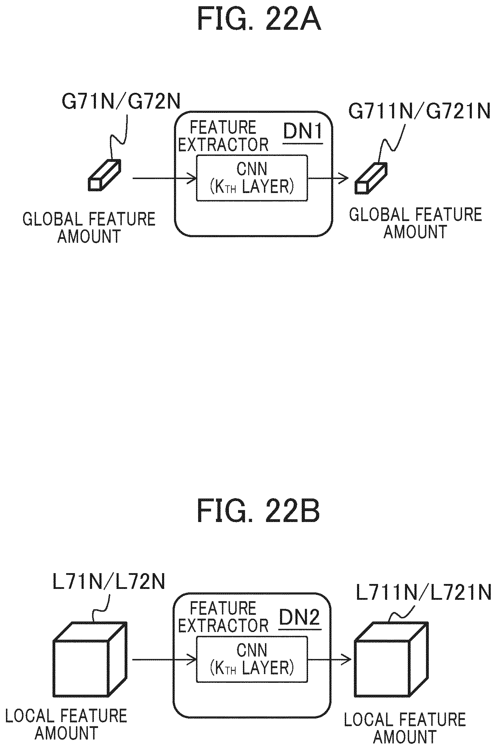

In the formula (17), pdnj indicates a value of a global feature amount, bdni indicates an offset value, s1 indicates the number of a filter coefficient, and h indicates a nonlinear function. As illustrated in Fig. 22A, using the formula (17), a feature amount fdni of an arbitrary filter i is obtained by obtaining a calculation result of the respective filters with respect to the global feature amounts G71N, G72N. For example, a matrix of the feature amount fdni obtained from the global feature amount G71N by a feature extractor DN1 is set as a global feature amount G711, and a matrix of the feature amount fdni obtained from the global feature amount G72N by the feature extractor DN1 is set as a global feature amount G721N.

[Formula 17]

$$fdni = h(\sum_{j=1}^{s1}(pdnj \times wdnj) + bdni)$$

$$\dots \quad (17)$$

Next, the adjustment units 74N obtains a filter coefficient wenj indicated in the formula (18) by machine learning or the like such so that a local feature amount FLNi (a local feature amount L71N) of the inputted image and a local feature amount FLNi (local feature amount L72N) of the perturbation image are brought close to each other.

In the formula (18), penj indicates a value of a local feature amount, beni indicates an offset value, s2 indicates the number of a filter coefficient, and h indicates a nonlinear function. As illustrated in Fig. 22B, using the formula (18), a feature amount feni of an arbitrary filter i is obtained by obtaining a calculation result of the respective filters with respect to the local feature amounts L71N, L72N. For example, a matrix of the feature amount feni obtained from the local feature amount L71N by a feature extractor DN2 is set as a local feature amount L711N, and a matrix of the feature amount feni obtained from the local feature amount L72N by the feature extractor DN2 is set as a local feature amount L721N.

[Formula 18]

$$feni = h(\sum_{j=1}^{s2}(penj \times wenj) + beni)$$

$$\dots \quad (18)$$

Using the formula (15) and the formula (17), the above-mentioned processing is performed in all encoders 71N and the adjustment units 73N thus repeating the extraction and the correction of the global feature amount, and eventually, the global feature amount G711M and the global feature amount G721M are obtained. Further, using the formula (16) and the formula (18), the above-mentioned processing is performed in all encoders 72N and the adjustment units 74N thus repeating the extraction and the correction of the local feature amount, and eventually, the local feature amount L711M and the local feature amount L721M are obtained.

The normalization unit 751, as indicated in the formula (19), normalizes the global feature amount G711M corrected by the adjustment unit 73M. In the formula (19), FG indicates a global feature amount G711M, and $FG_{max}$ indicates a maximum value of the global feature amount G711M. On the other hand, $FL_{max}$ indicates a maximum value of the local feature amount L711M. Accordingly, the global feature amount G711M is corrected to a global feature amount G7111M using the formula (19).

[Formula 19]

$$FG = FG/FG_{max}$$

$$FG = FG * FL_{max}$$

$$... \quad (19)$$

The normalization unit 752, as illustrated in the formula (19), normalizes the global feature amount G721M corrected by the adjustment unit 73M. In the formula (19), FG indicates a global feature amount G721M, and $FG_{max}$ indicates a maximum value of the global feature amount G721M. On the other hand, $FL_{max}$ indicates a maximum value he of the local feature amount L721M. Accordingly, using the formula (19), the global feature amount G721M is corrected to the global feature amount G7211M.

The global feature amount G7111M and the local feature amount L711M are set together to make a post normalization feature amount NMI. Further, the global feature amount G7211M and the local feature amount L721M are set together to make a post normalization feature amount NM2.

(ii) image reconstitution unit 24

The image reconstitution unit 24 creates, using a decoder, the reconstituted image 351 from a post normalization feature amount NM1, and generates a reconstituted image 352 from a post normalization feature amount NM2. As illustrated in Fig. 7 and the formula (6), a global feature amount G71111M is generated by copying x that is the global feature amount G7111M from a left upper side to a right lower side such that a vertical size and a lateral size of the local feature amount L711M become the same, and the global feature amount G71111M and the local feature amount L711M are connected to each other thus generating the post correction color and brightness feature amount CFM1.

Further, as illustrated in Fig. 7 and the formula (6), a global feature amount G72111M is generated by copying x that is the global feature amount G7211M from a left upper side to a right lower side such that a vertical size $H_y$ in the vertical direction and a lateral size $W_y$ in the horizontal direction of the local feature amount L721M become the same, and the global feature amount G7111M and the local feature amount L721M are connected to each other thus generating the post correction color and brightness feature amount CFM2.

The decoder has substantially the same configuration as the image reconstitution unit 14 according to the first embodiment. Using the decoder, the reconstituted image 351 is created from a matrix of the feature amount fpi obtained from the post correction color and brightness feature amount CFM1 using the feature extractor U1. The decoder obtains a filter coefficient wpj indicated in the formula (7) by machine learning or the like such that the inputted image 301 and the reconstituted image 351 reconstituted from the post correction color and brightness feature amount CFM1 are brought close in shape to each other.

Using the decoder, the reconstituted image 352 is created from a matrix of the feature amount fpi obtained from the post correction color and brightness feature amount CFM2 using the feature extractor U1. The decoder obtains a filter coefficient wqj indicated in the formula (7) by machine learning or the like such that the inputted image 301 and the reconstituted image 352 reconstituted from the post correction color and brightness feature amount CFM2 are brought close in shape to each other.

<Hardware configuration of image processing device>

A hardware configurational example of the image processing device 2 according to the present embodiment has substantially the same configuration illustrated in Fig. 2. However, different from the image processing device 1 according to the first embodiment, the hardware configuration of the image processing device 2 includes a color and brightness feature extraction and correction unit 18 and an image reconstitution unit 24 in the memory 202 instead of the color and brightness feature extraction unit 12 and the color and brightness feature correction unit 13.

The storage device 203 of the image processing device 2 stores the respective parameters, the reconstituted image and the like in the color and brightness corrector generated by the color and the brightness feature extraction and correction unit 18 and the image reconstitution unit 24.

<Steps of processing performed by image processing device>

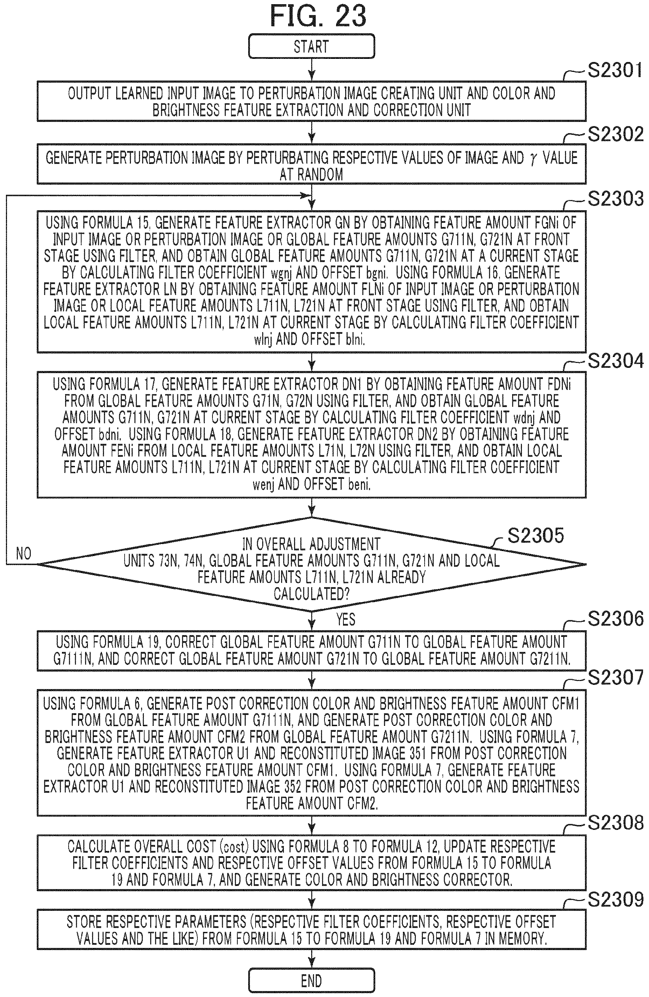

Fig. 23 is a flowchart illustrating an operation of the image processing device 2 according to the present invention at the time of performing machine learning. Hereinafter, although the description is made by setting the respective processing units (the input unit 10, the color and brightness feature extraction and correction unit 18 and the like) as operation subjects. However, the processing step of the image processing device maybe replaced such that the CPU 201 functions as an operation subject, and the CPU 201 performs the respective processing unit as a program.

(i) Step 2301

The input unit 10 receives a learned image, and outputs the inputted image to the perturbation image creating unit 11 and the color and brightness feature extraction and correction unit 18.

(ii) Step 2302

The perturbation image creating unit 11 creates a perturbation image by perturbating respective values (R value, G value, B value and the like) of an image and, a $\gamma$ value and the like at random.

(iii) Step 2303

The color and brightness feature extraction and correction unit 18 obtains a global feature amount FGNi from the inputted image, the perturbation image or the global feature amounts G711N, G721N at a previous stage using a filter based on the above-mentioned formula (15) using machine learning thus generating the feature extractor GN. With respect to the global feature amount FGNi, a filter coefficient wgnj and an offset value bgni are obtained. Accordingly, a global feature amount G71N at a current stage is obtained from the inputted image or the global feature amount G711N at a previous stage, and the global feature amount G72N at a current stage is obtained from a perturbation image, or the global feature amount G721N at a previous stage.

Further, the color and brightness feature extraction and correction unit 18 obtains a local feature amount FLNi from the inputted image, the perturbation image or the local feature amounts L711N, L721N at a previous stage using a filter based on the above-mentioned formula (16) using machine learning thus generating the feature extractor LN. With respect to the local feature amount FLNi, a filter coefficient wlnj and an offset value blni are obtained. Accordingly, a local feature amount L71N at a current stage is obtained from the inputted image or the local feature amount L711N at a previous stage, and the local feature mount L72N at a current stage is obtained from a perturbation image, the local feature amount L72N, or the local feature amount L721N at a previous stage.

(iv) Step 2304

The adjustment unit 73N of the color and brightness feature extraction and correction unit 18, by performing machine learning, obtains a feature amount FDNi from the global feature amounts G71N and G72N using a filter based on the above-mentioned formula (17) thus generating the feature extractor DN1. With respect to the feature amount FDNi, a filter coefficient wdnj and an offset value bdni are obtained. Accordingly, the global feature amount G711N at a current stage is obtained from the global feature amount G71N, and a global feature amount G721N at a current stage is obtained from the global feature amount G72N.

Further, the adjustment unit 74N of the color and brightness feature extraction and correction unit 18, by performing machine learning obtains the feature amount FENi from the local feature amounts L71N and L72N using a filter based on the above-mentioned formula (18). With respect to the feature amount FENi, a filter coefficient wenj, and an offset value beni are obtained. Accordingly, a local feature amount L711N at a current stage is obtained from the local feature amount L71N, and a local feature amount L721N at a current stage is obtained from the local feature amount L72N.

(v) Step 2305

In the color and brightness feature extraction and correction unit 18, in a case where the global feature amounts G711N, G721N and the local feature amounts L711N, L721N have been already calculated with respect to overall adjustment units 73N, 74N, a procedure advances to step 2306. In other cases, the procedure returns to step 2303.

(vi) Step 2306

The normalization unit 751 of the color and brightness feature extraction and correction unit 18, based on the above-mentioned formula (19), corrects the global feature amount G711N to the global feature amount G7111N. Further, the normalization unit 752 of the color and brightness feature extraction and correction unit 18, based on the above-mentioned formula (19), corrects the global feature amount G721N to the global feature amount G7211N.

(vii) Step 2307

The image reconstitution unit 24 generates the global feature amount G71111N from the global feature amount G7111N based on the above-mentioned formula (6), connects the global feature amount G71111N and the local feature amount L711N, thus generating the post correction color and brightness feature amount CFM1. Further, the image reconstitution unit 24 generates the global feature amount G72111N from the global feature amount G7211N based on the above-mentioned formula (6), connects the global feature amount L72111N and the local feature amount L721N thus generating the post correction color and brightness feature amount CFM2.

Further, the image reconstitution unit 24, by performing machine learning, obtains a feature amount FPi from the post correction color and brightness feature amount CFM1 using a filter based on the above-mentioned formula (7) thus generating a feature extractor U1. A filter coefficient wpj and an offset value bpi with respect to a feature amount FPi are obtained. Accordingly, the reconstituted image 351 is created from the post correction color and brightness feature amount CFM1.

Further, the image reconstitution unit 24, by performing machine learning, obtains a feature amount FPi from the post correction color and brightness feature amount CFM2 using a filter based on the above-mentioned formula (7) thus generating a feature extractor U1. A filter coefficient wpj and an offset value bpi with respect to a feature amount FPi are obtained. Accordingly, a reconstituted image 352 is created from the post correction color and brightness feature amount CFM2.

(viii) Step 2308

The color and brightness feature extraction and correction unit 18 and the image reconstitution unit 24, based on the above-mentioned formula (8) and formula (11), calculates a total cost indicated in the formula (12), updates respective parameters (respective filter coefficients, respect offset values) in the above-mentioned formula (15) to formula (19) and formula (7) using machine learning such that the cost is reduced thus generating the color and brightness corrector. In the above-mentioned formula (10) and formula (11), FeatureG11 indicates the global feature amount G711N, FeatureG21 indicates the global feature amount G721N, FeatureL11 indicates the local feature amount L711N, and FeatureL21 indicates the local feature amount L721N.

(ix) Step 2309

The output unit 15 stores the respective parameters (respective filter coefficients, respective offset values and the like) in the formula (15) to the formula (19) and the formula (7) in the memory 90.

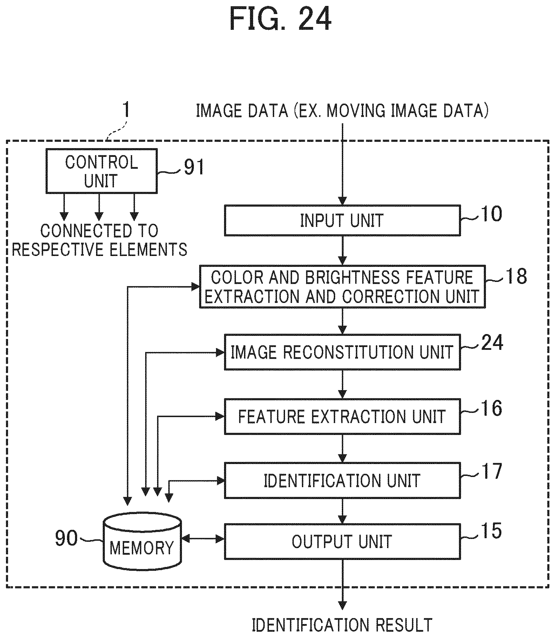

The image processing device 2 according to the second embodiment at the time of performing evaluation, as illustrated in Fig. 24, includes the same configurations as the image processing device 1 according to the first embodiment illustrated in Fig. 4 in many aspects. However, different from the first embodiment, the image processing device 2 according to the embodiment at the time of performing evaluation does not include the correction color and brightness feature extraction unit 12 and the color and the brightness feature correction unit 13 and, instead, includes a color and brightness feature extraction and correction unit 18 and an image reconstitution unit 24. Accordingly, the description is made with respect to the configurations that differs from the configurations illustrated in Fig. 4.

Values of the respective parameters of the color and brightness corrector generated at the time of performing learning are read from the memory 90, and respective parameters of the color and brightness extraction and correction unit 18 and the image reconstitution unit 24 are set.

With respect to an image inputted from the input unit 10, a reconstituted image where difference in color and brightness is suppressed is created using the color and brightness extraction and correction unit 18 and the image reconstitution unit 24.

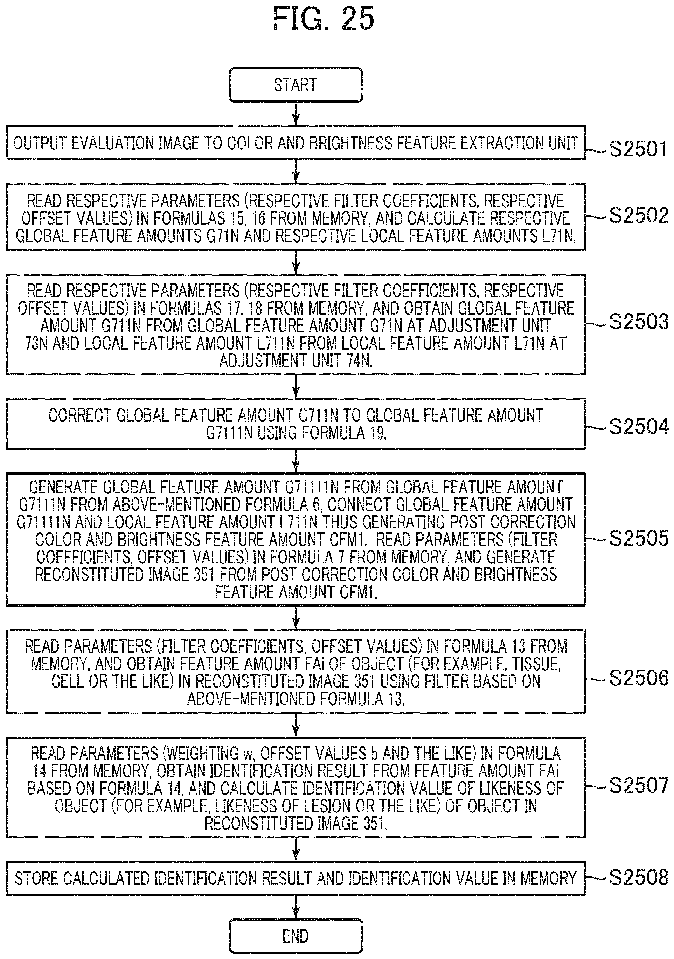

Fig. 25 is a flowchart for describing operations at the time of evaluating the image processing device 2 according to this embodiment. Hereinafter, although the description is made by setting the respective processing units (the input unit 10, the color and brightness feature extraction and correction unit 18 and the like) as operation subjects. However, the processing step of the image processing device may be replaced such that the CPU 201 functions as an operation subject, and the CPU 201 performs the respective processing unit as a program.

(i) Step 2501

The input unit 10 receives an evaluation image, and outputs the evaluation image to the color and brightness feature extraction and correction unit 18.

(ii) Step 2502

The color and brightness feature extraction and correction unit 18 reads the respective parameters (respective filter coefficients, respective offset values) in the formula (15) and the formula (16) from the memory, and calculates the respective global feature amounts G71N and the respective local feature amounts L71N.

(iii) Step 2503

The color and brightness feature extraction and correction unit 18 reads the respective parameters (respective filter coefficients, respective offset values) in the formula (17) and the formula (18) from the memory, and obtains a global feature amount G711N from a global feature amount G71N by the adjustment unit 73N, and obtains a local feature amount L711N from a local feature amount L71N by the adjustment unit 74N.

(iv) Step 2504

The color and brightness feature extraction and correction unit 18 reads the respective parameters (respective filter coefficients, respective offset values) in the formula (19) from the memory, and corrects the global feature amount G711N to the global feature amount G7111N.

(v) Step 2505

The image reconstitution unit 24, based on the above-mentioned formula (6), generates the global feature amount G71111N from the global feature amount G7111N, and connects the global feature amount G71111N and the local feature amount L711N thus generating the post correction color and brightness feature amount CFM1.
The image reconstitution unit 24 reads the parameters (filter coefficients, offset values) in the formula (7) from the memory, and creates the reconstituted image 351 from the post correction color and brightness feature amount CFM1.

(vi) Step 2506

The feature extraction unit 16 reads the parameters (filter coefficients, offset values) in the formula (13) from the memory, and obtains a feature amount FAi of an object (for example, a tissue, a cell or the like) of the reconstituted image 351 using a filter based on the above-mentioned formula (13).

(vii) Step 2507

The identification unit 17 reads the parameters (weighting w, offset values b and the like) in the formula (14) from the memory, obtains an identification result from the feature amount FAi based on the above-mentioned formula (14), and calculates an identification value of object likeliness (for example, lesion or the like) of an object in the reconstituted image 351.

(viii) Step 2508

The output unit 15 stores the calculated identification result and identification value in the memory 90.
According to the second embodiment, the color and brightness feature amounts is extracted and corrected for respective layers using a perturbation image at the time of performing machine learning to form a color and brightness corrector that creates a reconstituted image where difference in color and brightness are suppressed. Further, at the time of performing the evaluation, the reconstituted image is created from the evaluation image using the color and brightness corrector, and the reconstituted image is identified using the identifier. Accordingly, an object (for example, an abnormal tissue or the like) in the image can be identified with high accuracy. The processing of the learning and the evaluation by the color and brightness corrector according to the second embodiment may be performed by a computer system having different evaluation processing system and learning system from those of the second embodiment.

(3) Third Embodiment

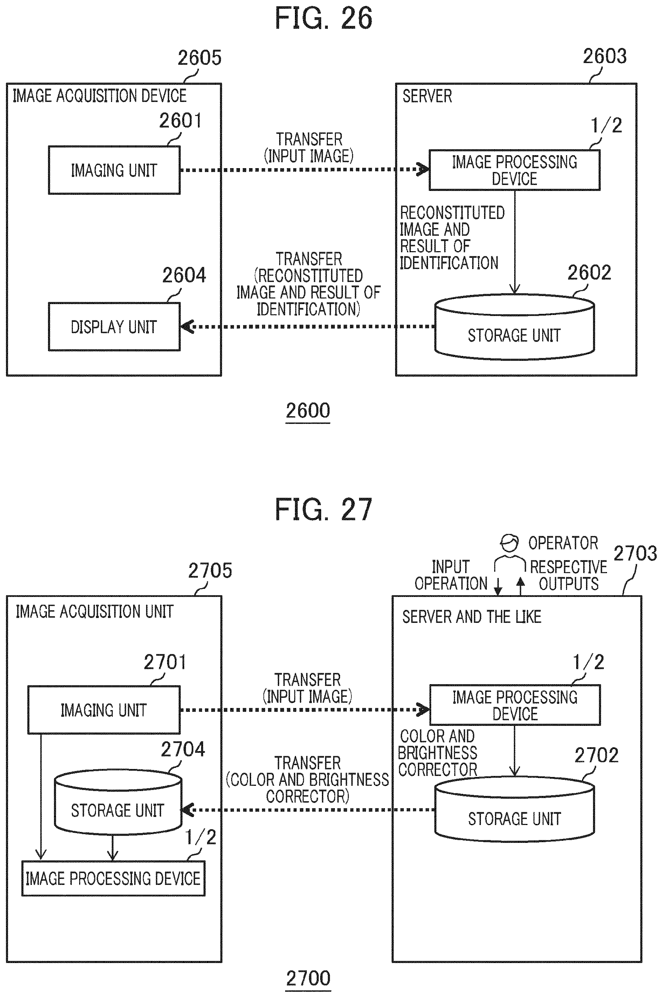

Fig. 26 is a functional block diagram illustrating the configuration of an image processing system 2600 according to a third embodiment of this specification. The image processing system 2600 includes a server 2603 and an image acquisition device 2605. The image processing system 2600 also functions as an image identification system.

The image acquisition device 2605 is, for example, a device such as a personal computer equipped with a virtual slide device or a camera. The image acquisition device 2605 includes: an imaging unit 2601 that images image data; and a display unit 2604 for displaying a reconstituted image/identification result transmitted from the server 2603. The image acquisition device 2605 includes a communication device that transmits image data to the server 2603 and receives data transmitted from the server 2603 although the communication device is not illustrated in the drawing.

In the server 2603, a color and brightness corrector using the image processing device 1 or 2 according to the first embodiment or the second embodiment with respect to image data (inputted data) transmitted from the image acquisition device 2605 is formed, and a reconstituted image and an identification result using the formed color and brightness corrector is obtained. The server 2603 includes a storage unit 2602 that stores the reconstituted image and the identification result outputted from the image processing device 1 or 2.

The server 2603 includes a communication device that receives image data transmitted from the image acquisition device 2605 and transmits data such as a reconstituted image and an identification result to the image acquisition device 2605, although the communication device is not illustrated in the drawing.

The image processing device 1 or 2 creates a reconstituted image of an image imaged by the imaging unit 2601 using the color and brightness corrector, and classifies the presence or the absence of an object to be detected (for example, abnormal tissues, abnormal cells (for example, cancer), and the like) with respect to an object (for example, tissues, cells and the like) in the reconstituted image. The display unit 2604 displays data of a reconstituted image, an identification result and the like transmitted from the server 2603 on a display screen of the image acquisition device 2605. As the image acquisition device 2605, a regenerative medical device, a culture device for iPS cells having an imaging unit, an MRI, an ultrasonic image imaging device and the like may be also used.

According to the third embodiment, it is possible to provide the image processing system where the reconstituted images in images transmitted from facilities disposed at different places using the color and brightness corrector obtained in the image processing device 1 or 2 are created, with respect to an object (for example, tissues, cells and the like) in the reconstituted image, whether or not such an object is an object to be detected (abnormal tissues, abnormal cells or the like) using respective parameters of the identifier is classified with high accuracy, data such as reconstituted image and an identification result is transferred to facilities or the like in different places, and data on a reconstituted image, an identification result and the like is displayed on a display unit of an image acquisition device installed in the facility or the like.

(4) Fourth Embodiment

Fig. 27 is functional block diagram illustrating the configuration of an image processing system 2700 according to a fourth embodiment of the present invention. The image processing system 2700 includes a server 2703 and an image acquisition device 2705. The image processing system 2700 also functions as an image identification system.

The image acquisition device 2705 is, for example, a device such as a personal computer equipped with a virtual slide device or a camera. The image acquisition device 2705 includes: an imaging unit 2701 that images image data; a storage unit 2704 that stores a color and brightness corrector transmitted from the server 2703; and an image processing device 1 or 2 that reads a color and brightness corrector transmitted from the server 2703, creates a reconstituted image newly imaged by an imaging unit 2701 of the image acquisition device 2705, and classifies whether or not an object is an object to be detected (abnormal tissues, abnormal cells or the like) using the identifier in the image processing device 1 or 2 according to the first or second embodiment of the present invention. The image acquisition device 2705 includes a communication device that transmits image data to the server 2703 and receives data transmitted from the server 2703, although the communication device is not illustrated in the drawing.

The server 2703 includes a storage unit 2702 that stores the color and brightness corrector outputted from the image processing device 1 or 2 by forming a color and brightness corrector from the image processing device 1 or 2 according to the first or second embodiment of the present invention, with respect to image data transmitted from the image acquisition device 2705. Further, the server 2703 receives input designation of an inputted image or a teacher image from an operator. Still further, the server 2703 offers respective outputs (reconstituted image, identification result and the like) of the image processing device 1 or 2 to an operator. The server 2703 includes a communication device that receives image data transmitted from the image acquisition device 2705 and transmits the color and brightness corrector to the image acquisition device 2705, although the communication device is not illustrated in the drawing.

The image processing device 1 or 2 creates a reconstituted image from an image imaged by the imaging unit 2701, performs machine learning so as to determine that an object (for example, tissues, cells and the like) in the reconstituted image is an object to be detected (for example, normal tissues and cells being normal tissues and normal cells, and abnormal tissues and cells being abnormal tissues and cells), and forms an identifier that calculates feature amounts of an object (for example, tissues, cells and the like) in images of installations disposed at different places. The storage unit 2704 stores the color and brightness corrector and the like transmitted from the server 2703.

The image processing device 1 or 2 in the image acquisition device 2705 reads the color and brightness corrector, the identifier and the like from the storage unit 2704, creates a reconstituted image of an image newly imaged by the imaging unit 2701 of the image acquisition device 2705 using the color and brightness corrector, classifies whether or not an object (for example, tissues, cells and the like) in the reconstituted image is an object to be detected (for example, abnormal tissues and abnormal cells or the like) using the identifier, and displays data on the reconstituted image, the identification result and the like on a display screen of an output device 204 of the image processing device 1 or 2.

As the image acquisition device 2705, a regenerative medical device and a culture device for iPS cells having an imaging unit, or an MRI and an ultrasonic image imaging device and the like may be also used.

According to the fourth embodiment, the color and brightness corrector or the like is formed by performing the machine learning so as to suppress difference in color and brightness between images with respect to the images transferred from facilities at different places. The color and brightness corrector and the like are transferred to the facilities at the different places, the color and brightness corrector is read by the image acquisition devices in the facilities thus creating a reconstituted image of a newly imaged image. Then, the identifier that is formed by performing machine leaning so as to classify an object to be detected (for example, normal tissues and cells being normal tissues and normal cells, and abnormal tissues and cells being abnormal tissues and cells) is read, and the classification is made whether or not an object (for example, tissues, cells or the like) in the reconstituted image is an object to be detected (for example, abnormal tissues, abnormal cells or the like). Accordingly, it is possible to provide the image processing system.

With respect to the respective embodiments described heretofore, the following modifications are conceivable. In the perturbation image creating unit 11, the perturbation may be performed on a color order system other than RGB, such as HSV, HLS and the like, or fine noises may be mixed. Also in these cases, the substantially the same advantageous effects can be obtained.

In the normalization unit of the color and brightness feature correction unit 13, as one example of normalization method, the method that normalizes the global feature amount using the maximum value of the local feature amount has been described. However, with the use of normalization method other than the described normalization method, the substantially the same advantageous effects can be obtained. Such methods may include a method where a local feature amount is normalized using a maximum value of a global feature amount, and a method where lengths of feature amount vectors in respective coordinates of a global feature amount and a local feature amount are normalized. Further, in the color and brightness feature correction unit 13, the normalization is performed using two normalization units. However, the normalization may be performed using more than two normalization units. Also in this case, substantially the same advantageous effects can be obtained.

In the image reconstitution units 14, 24, a loss value is calculated using MSE as a loss function. However, other loss functions such as cross entropy loss can be used. Also in this case, substantially the same advantageous effects can be obtained. Further, the cost is calculated using four loss values. The cost may be calculated using five loss values by adding a loss value between an identification result and a correct value. Also in this case, substantially the same advantageous effects can be obtained.

In the feature extraction unit 16, a plurality of feature amounts are obtained using a filter by machine learning. However, other feature amounts such as HOG may be used. Also in this case, substantially the same advantageous effects can be obtained.

Further, in the identification unit 17, as a loss function, Negative log likelihood is used. However, a mean square error, a Hinge loss and the like may be used. Also in this case, substantially the same advantageous effects can be obtained

The present invention can be realized by a program code of software that realize functions of the embodiments. In this case, a storge medium that records the program code is offered to a system or a device, and a computer (or a CPU or a MPU) of the system or the device reads the program code stored in the recording medium. In this case, the program code itself read from the storage medium realizes the functions of the above-mentioned embodiments and hence, the program code itself and the storage medium that stores the program code constitute the present invention. As such a storage medium that supplies a program code, for example, a flexible disk, a CD-ROM, a DVD-ROM, a hard disk, an optical disk, a magneto-optical disk, a CD-R, a magnetic tape, a non-volatile memory card, a ROM and the like are used.

Further, based on an instruction of a program code, an OS (operating system) that functions on the computer or the like may perform a part or the entirety of the actual processing, and the functions of the above-mentioned embodiments may be realized by such processing. Further, a program code read by a storage medium may be written in a memory on the computer and, thereafter, based on an instruction of the program code, a CPU of a computer or the like may perform a part or the entirety of actual processing so that the functions of the above-mentioned embodiments may be realized by such processing.

By distributing a program code of software that realizes the functions of the embodiments via a network, the program code may be stored in the storage means such as a hard disk, a memory of the system or the device, or a storage medium such as a CD-RW or CD-R, at the time of use, a computer (or a CPU or a MPU) of the system or the device may read and execute the program code stored in the storage means or the storage medium.

Lastly, the process and the techniques described in this specification are not fundamentally associated with any specific device, and may be implemented by any suitable combinations of the components. Further, devices of versatile type for general-use purpose can be used in accordance with the method described in this specification. There may be a case where it is advantageous to construct a dedicated device for performing steps of the method described in the specification. Various inventions can be formed by suitable combinations of a plurality of constitutional elements disclosed in the embodiments. For example, some constitutional elements may be erased from the entire constitutional elements illustrated in the embodiments. Further, the constitutional elements that are used over different embodiments may be suitably combined with each other. Although the present invention has been described in an associated manner with the specific examples, these examples are not limitative in any aspects and are provided for an exemplifying purpose. Those who are skilled in the art can understand that a large number of combinations of hardware, software and firmware suitable for carrying out the present invention exist. For example, the software described above can be implemented by programs or script languages in a wide range such as an assembler, C/C++, perl, Shell, PHP, and Java (registered trademark).

Further, in the above-mentioned embodiments, control lines and information lines that are necessary for explaining the configurations of the embodiments are illustrated, and it is not always the case that all control lines and information lines that are inevitable from a viewpoint of a product are described. All configurations may be mutually connected with each other.

In addition to the above, to those who are skilled in this technical field, it is apparent that other implementations of the present invention are disclosed by construing the specification and the embodiments of the present invention. Versatile modes and/or components of the described embodiments can be used singly or in any combinations.

**Claims**

1. An image processing device comprising:

   one or more processors; and
   one or more memories, wherein
   the one or more memories each stores a corrector that creates a reconstituted image from an inputted image in accordance with a set parameter,
   adjustment of the set parameter is performed such that a first reconstituted image created by the corrector from an inputted first image, and a second image that is directed to the same object as the first image and has a different color tone are brought close in shape to each other, and
   the processor inputs an object image to the corrector and creates a reconstituted image of the object image, and
   the corrector, in accordance with the set parameter:

      extracts a feature amount from the inputted object image;
      corrects the extracted feature amount; and
      creates the reconstituted image of the object image from the corrected feature amount.

2. The image processing device according to claim 1, wherein
   the first image is a perturbation image created from the second image.

3. The image processing device according to claim 1, wherein
   the corrector:

      creates a plural kinds of feature amounts that differ in size including the feature amount from the inputted object image;
      corrects the plural kinds of extracted feature amounts respectively; and
      creates the reconstituted image of the object image from the plural kinds of corrected feature amounts.

4. The image processing device according to claim 1, wherein
   the one or more processors:

each extracts a feature amount from the reconstituted image of the object image; and
obtains an identification result of the reconstituted image of the object image from the feature amount extracted from the reconstituted image of the object image.

5. The image processing device according to claim 1, wherein

the one or more processors perform the adjustment of the set parameter, and in the adjustment,
the first image is created by giving perturbation to the second image,
the first reconstituted image is created by inputting the first image to the corrector,
a second reconstituted image is created by inputting the second image to the corrector,
the set parameter is adjusted so as to reduce a cost calculated based on a predetermined loss, and
the loss includes a difference between the first reconstituted image and the second image and a difference between the second reconstituted image and the second image.

6. The image processing device according to claim 5, wherein
the loss includes a difference between a feature amount obtained by correcting a feature amount extracted from the first image and a feature amount obtained by correcting a feature amount extracted from the second image.

7. The image processing device according to claim 3, wherein

the one or more processors perform the adjustment of the set parameter, and in the adjustment,
the first image is created by giving perturbation to the second image,
the first reconstituted image is created by inputting the first image to the corrector,
a second reconstituted image is created by inputting the second image to the corrector,
the set parameter is adjusted so as to reduce a cost calculated from a predetermined loss, and
the loss includes:

a difference between the first reconstituted image and the second image;
a difference between the second reconstituted image and the second image; and
a difference between corrected feature amounts of the same kind between a feature amount obtained by correcting a plural kinds of feature amount extracted from the first image, and a feature amount obtained by correcting a plural kinds of feature amount extracted from the second image.

8. The image processing device according to claim 5, wherein
the one or more processors display the loss, the first reconstituted image and the second reconstituted image.

9. An image processing device comprising:

one or more processors; and
one or more memories, wherein
the one or more memories each stores a corrector that creates a reconstituted image from an inputted image in accordance with a set parameter,
the one or more processors perform the adjustment of the set parameters, and in the adjustment,
a first image is created by giving perturbation to a second image,
the first reconstituted image is created by inputting the first image to the corrector,
the second reconstituted image is created by inputting the second image to the corrector,
the set parameter is adjusted so as to reduce a cost calculated from a predetermined loss, and
the loss includes a difference between the first reconstituted image and the second image and a difference between the second reconstituted image and the second image.

10. The image processing device according to claim 9, wherein
the loss includes a difference between a feature amount obtained by correcting a feature amount extracted from the first image and a feature amount obtained by correcting a feature amount extracted from the second image.

11. An image identification system comprising:

An image acquisition device that includes an imaging device that creates an image by imaging an object; and
the image processing device according to claim 4, wherein

the image acquisition device transmits the object image to the image processing device,

the image processing device transmits a reconstituted image of the object image and the identification result to the image acquisition device, and

the image acquisition device displays the received reconstituted image and the identification result to a display device.

12. An image identification system comprising:

an image acquisition device that images image data; and

a first image processing device that is the image processing device according to claim 9, wherein

the image acquisition device includes the image processing device according to claim 4,

the image acquisition device transmits the image data to the first image processing device,

the first image processing device creates the corrector using the received image data, stores the corrector in a memory, and transmits the corrector to the image acquisition device,

the image acquisition device stores the received corrector in a memory, and

the image processing device in the image acquisition device creates a reconstituted image of the object image using the corrector, and calculates the identification result, and displays the object image, the reconstituted image of the object image, and the identification result on a display device.

13. An image processing method using a device, wherein

the device stores a corrector that creates a reconstituted image from an inputted image in accordance with a set parameter,

an adjustment of the set parameter is performed such that a first reconstituted image created by the corrector from an inputted first image and a second image that is the same object as the first image and differs from the first image in a color tone are brought close in shape to each other,

in the image processing method,

the device inputs an object image to the corrector thus creating a reconstituted image of the object image, and

the creation of the reconstituted image of the object image by the corrector is performed such that, in accordance with the set parameter:

a feature amount is extracted from the inputted object image;

the extracted feature amount is corrected; and

the reconstituted image of the object image is created from the corrected feature amount.

14. The image processing method according to claim 13, wherein

an identification result of the reconstituted image of the inputted image is calculated based on a feature amount extracted from the reconstituted image of the inputted image.

15. An image processing method using a device, wherein

the device stores a corrector that creates a reconstituted image from an inputted image in accordance with a set parameter,

in the image processing method,

the device creates a reconstituted image of an object image by inputting the object image to the corrector, and

the creation of the reconstituted image of the object image by the corrector is performed such that, in accordance with the set parameter,

a first image is created by giving perturbation to a second image,

a first reconstituted image is created by inputting the first image to the corrector,

a second reconstituted image is created by inputting the second image into the corrector,

the set parameter is adjusted so as to reduce a cost calculated from a predetermined loss, and

the loss includes a difference between the first reconstituted image and the second image and a difference between the second reconstituted image and the second image.

# FIG. 1

IMAGE DATA (EX. MOVING IMAGE DATA)

1

CONTROL UNIT ~ 91

CONNECTED TO
RESPECTIVE ELEMENTS

INPUT UNIT ~ 10

PERTURBATION IMAGE
CREATING UNIT ~ 11

COLOR AND BRIGHTNESS
FEATURE EXTRACTION UNIT ~ 12

COLOR AND BRIGHTNESS
FEATURE CORRECTION UNIT ~ 13

IMAGE RECONSTITUTION
UNIT ~ 14

90 ~ MEMORY

OUTPUT UNIT ~ 15

RECONSTITUTED IMAGE

# FIG. 2

1

207    202

MEMORY

| | |
|---|---|
| **10** INPUT UNIT | **14/24** IMAGE RECONSTITUTION UNIT |
| **11** PERTURBATION IMAGE CREATING UNIT | **16** FEATURE EXTRACTION UNIT |
| **12** COLOR AND BRIGHTNESS FEATURE EXTRACTION UNIT | **17** IDENTIFICATION UNIT |
| **13** COLOR AND BRIGHTNESS FEATURE CORRECTION UNIT | **15** OUTPUT UNIT |
| **18** COLOR AND BRIGHTNESS FEATURE EXTRACTION AND CORRECTION UNIT | |

**201** CPU

**204** OUTPUT DEVICE

**205** INPUT DEVICE

**206** COMMUNICATION DEVICE

**203** AUXILIARY STORAGE DEVICE

# FIG. 3

EP 4 760 629 A1

# FIG. 4

IMAGE DATA (EX. MOVING IMAGE DATA)

CONTROL UNIT ~91

CONNECTED TO RESPECTIVE ELEMENTS

INPUT UNIT ~10

COLOR AND BRIGHTNESS FEATURE EXTRACTION UNIT ~12

COLOR AND BRIGHTNESS FEATURE CORRECTION UNIT ~13

IMAGE RECONSTITUTON UNIT ~14

FEATURE EXTRACTION UNIT ~16

IDENTIFICATION UNIT ~17

90 ~ MEMORY

OUTPUT UNIT ~15

IDENTIFICATION RESULT

# FIG. 5A

301/302

INPUT IMAGE OR
PERTURBATION
IMAGE

FEATURE EXTRACTOR G5

| CNN (FIRST LAYER) | ... | CNN ($N_{TH}$ LAYER) |

GLOBAL FEATURE
AMOUNT
FGi

# FIG. 5B

301/302

INPUT IMAGE OR
PERTURBATION
IMAGE

FEATURE EXTRACTOR L5

| CNN (FIRST LAYER) | ... | CNN ($N_{TH}$ LAYER) |

LOCAL FEATURE
AMOUNT
FLi

# FIG. 6A

GLOBAL FEATURE
AMOUNT
G1/G2

GLOBAL FEATURE
AMOUNT
G11/G21

FEATURE EXTRACTOR D1

| CNN (FIRST LAYER) | $\cdots$ | CNN ($N_{TH}$ LAYER) |

# FIG. 6B

LOCAL FEATURE
AMOUNT
L1/L2

LOCAL FEATURE
AMOUNT
L11/L21

FEATURE EXTRACTOR D2

| CNN (FIRST LAYER) | $\cdots$ | CNN ($N_{TH}$ LAYER) |

# FIG. 7

GLOBAL FEATURE
AMOUNT
G111/G211

GLOBAL FEATURE
AMOUNT
G1111/G2111

COPY

x

y

GLOBAL FEATURE
AMOUNT
G111/G211   COPY

GLOBAL FEATURE
AMOUNT
G1111/2111

x

y

# FIG. 8

CF1/CF2

351/352

FEATURE EXTRACTOR U1

CNN
(FIRST LAYER)

· · ·

CNN
($N_{TH}$ LAYER)

POST CORRECTION
COLOR AND
BRIGHTNESS
FEATURE AMOUNT

RECONSTITUTED
IMAGE

# FIG. 9

EP 4 760 629 A1

# FIG. 10

351

RECONSTITUTED
IMAGE

FEATURE EXTRACTOR A1

CNN
(FIRST LAYER)

· · · ·

CNN
($N_{TH}$ LAYER)

FEATURE AMOUNT
FAi

# FIG. 11

FILTER
401

301

FIG. 12

FEATURE AMOUNT
FAi          501

LOGISTIC
REGRESSION
LAYER

OBJECT TO BE DETECTED
(ABNORMAL TISSUE OR THE LIKE)

OBJECT OTHER THAN OBJECT TO BE
DETECTED (NORMAL TISSUE OR THE LIKE)

# FIG. 13

# FIG. 14

| INPUT IMAGE | PERTURBATION IMAGE | RECONSTITUTED IMAGE 1 | RECONSTITUTED IMAGE 2 | LOSS VALUE |

LOSS VALUE
(1):0.09
(2):0.08
(3):0.06
(4):0.03

COST VALUE
(1):0.26

# FIG. 15

INPUT IMAGE    301

TUMOR

522

521

# FIG. 16A

DETERMINATION OF LIKENESS OF OBJECT (LIKENESS OF LESION)

|  | NON-TUMOR | TUMOR | LIKENESS OF OBJECT | DISPLAY |
|---|---|---|---|---|
| ▨ BREAST | ○ | ◉ | 0.89 | IMAGE |

DETERMINATION RESULT OF
LIKENESS OF OBJECT : TUMOR                10-TIMES MAGNIFIED IMAGE

# FIG. 16B

INPUT IMAGE                          RECONSTITUTED IMAGE

IMAGE                                          IMAGE

⇔

IDENTIFICATION
SCORE : 0.89

# FIG. 17

```
START
```

OUTPUT LEARNED INPUT IMAGE TO PERTURBATION IMAGE CREATING UNIT AND COLOR AND BRIGHTNESS FEATURE EXTRACTION UNIT —S1701

GENERATE PERTURBATION IMAGE BY PERTURBATING RESPECTIVE VALUES OF IMAGE AND $\gamma$ VALUE AT RANDOM —S1702

USING FORMULA 1, GENERATE FEATURE EXTRACTOR G5 BY OBTAINING FEATURE AMOUNT FGi OF INPUT IMAGE USING FILTER, AND OBTAIN GLOBAL FEATURE AMOUNTS G1, G2 BY CALCULATING FILTER COEFFICIENT wgj AND OFFSET bgi. USING FORMULA 2, GENERATE FEATURE EXTRACTOR L5 BY OBTAINING FEATURE AMOUNT FLi OF INPUT IMAGE USING FILTER, AND OBTAIN LOCAL FEATURE AMOUNTS L1, L2 BY CALCULATING FILTER COEFFICIENT wlj AND OFFSET bli. —S1703

USING FORMULA 3, GENERATE FEATURE EXTRACTOR D1 BY OBTAINING FEATURE AMOUNT FDi FROM GLOBAL FEATURE AMOUNTS G1, G2 USING FILTER, AND OBTAIN GLOBAL FEATURE AMOUNTS G11, G21 BY CALCULATING FILTER COEFFICIENT wdj AND OFFSET bdi. USING FORMULA 4, GENERATE FEATURE EXTRACTOR D2 BY OBTAINING FEATURE AMOUNT FEi FROM LOCAL FEATURE AMOUNTS L1, L2 USING FILTER, AND OBTAIN LOCAL FEATURE AMOUNTS L11, L21 BY CALCULATING FILTER COEFFICIENT wej AND OFFSET bei. —S1704

USING FORMULA 5, CORRECTS GLOBAL FEATURE AMOUNT G11 TO GLOBAL FEATURE AMOUNT G111, AND CORRECT GLOBAL FEATURE AMOUNT G21 TO GLOBAL FEATURE AMOUNT G211. —S1705

USING FORMULA 6, GENERATE POST CORRECTION COLOR AND BRIGHTNESS FEATURE AMOUNT CF1 FROM GLOBAL FEATURE AMOUNT G111, AND GENERATE POST CORRECTION COLOR AND BRIGHTNESS FEATURE AMOUNT CF2 FROM GLOBAL FEATURE AMOUNT G211. USING FORMULA 7, GENERATE FEATURE EXTRACTOR U1 AND RECONSTITUTED IMAGE 351 FROM POST CORRECTION COLOR AND BRIGHTNESS FEATURE AMOUNT CF1. USING FORMULA 7, GENERATE FEATURE EXTRACTOR U1 AND RECONSTITUTED IMAGE 352 FROM POST CORRECTION COLOR AND BRIGHTNESS FEATURE AMOUNT CF2. —S1706

CALCULATE AN OVERALL COST (cost) USING FORMULA 8 TO FORMULA 12, UPDATE RESPECTIVE FILTER COEFFICIENTS AND RESPECTIVE OFFSET VALUES FROM FORMULA 1 TO FORMULA 7, AND GENERATE COLOR AND BRIGHTNESS CORRECTOR. —S1707

STORE RESPECTIVE PARAMETERS (RESPECTIVE FILTER COEFFICIENT, RESPECTIVE OFFSET VALUES AND THE LIKE) FROM FORMULA 1 TO FORMULA 7 IN MEMORY. —S1708

```
END
```

# FIG. 18

START

OUTPUT EVALUATION IMAGE TO COLOR AND BRIGHTNESS FEATURE EXTRACTION UNIT — S1801

READ RESPECTIVE PARAMETERS (RESPECTIVE FILTER COEFFICIENTS, RESPECTIVE OFFSET VALUES) IN FORMULAS 1, 2 FROM MEMORY, AND CALCULATE GLOBAL FEATURE AMOUNT G1 AND LOCAL FEATURE AMOUNT L1. — S1802

READ RESPECTIVE PARAMETER (RESPECTIVE FILTER COEFFICIENTS, RESPECTIVE OFFSET VALUES) IN FORMULAS 3, 4 FROM MEMORY, AND OBTAIN GLOBAL FEATURE AMOUNT G11 FROM GLOBAL FEATURE AMOUNT G1 AND LOCAL FEATURE AMOUNT L11 FROM LOCAL FEATURE AMOUNT L1. — S1803

READ PARAMETERS (FILTER COEFFICIENTS, OFFSET VALUES) IN FIG. 5 FROM MEMORY, AND CORRECT GLOBAL FEATURE AMOUNT G11 TO GLOBAL FEATURE AMOUNT TO G111. — S1804

GENERATE GLOBAL FEATURE AMOUNT G1111 FROM GLOBAL FEATURE AMOUNT G111 FROM ABOVE-MENTIONED FORMULA 6, CONNECT GLOBAL FEATURE AMOUNT G1111 AND LOCAL FEATURE AMOUNT L11 THUS GENERATING POST CORRECTION COLOR AND BRIGHTNESS FEATURE AMOUNT CF1. READ PARAMETERS (FILTER COEFFICIENTS, OFFSET VALUES) IN FORMULA 7 FROM MEMORY, AND GENERATE RECONSTITUTED IMAGE 351 FROM POST CORRECTION COLOR AND BRIGHTNESS FEATURE AMOUNT CF1. — S1805

READ PARAMETERS (FILTER COEFFICIENTS, OFFSET VALUES) IN FORMULA 13 FROM MEMORY, AND OBTAIN FEATURE AMOUNT FAi OF OBJECT (FOR EXAMPLE, TISSUE, CELL OR THE LIKE) IN RECONSTITUTED IMAGE 351 USING FILTER. — S1806

READ PARAMETERS (WEIGHTING w, OFFSET VALUES b AND THE LIKE) IN FORMULA 14 FROM MEMORY, OBTAIN IDENTIFICATION RESULT FROM FEATURE AMOUNT FAi, AND CALCULATE IDENTIFICATION VALUE OF LIKENESS OF OBJECT (FOR EXAMPLE, LIKENESS OF LESION OR THE LIKE) OF OBJECT IN RECONSTITUTED IMAGE 351. — S1807

STORE CALCULATED IDENTIFICATION RESULT AND IDENTIFICATION VALUE IN MEMORY — S1808

END

# FIG. 19

IMAGE DATA (EX. MOVING IMAGE DATA)

2

CONTROL UNIT ~91

CONNECTED TO RESPECTIVE ELEMENTS

INPUT UNIT ~10

PERTURBATION IMAGE CREATING UNIT ~11

COLOR AND BRIGHTNESS FEATURE EXTRACTION AND CORRECTION UNIT ~18

IMAGE RECONSTITUTION UNIT ~24

90~ MEMORY

OUTPUT UNIT ~15

RECONSTITUTED IMAGE

# FIG. 20A

## FIG. 20B

EP 4 760 629 A1

# FIG. 21A

GLOBAL FEATURE
AMOUNT
FGNi

FEATURE
EXTRACTOR GN

CNN
($K_{TH}$ LAYER)

INPUT IMAGE
OR
PERTURBATION IMAGE
OR
GLOBAL FEATURE AMOUNT

# FIG. 21B

LOCAL FEATURE
AMOUNT
FLNi

FEATURE
EXTRACTOR LN

CNN
($K_{TH}$ LAYER)

INPUT IMAGE
OR
PERTURBATION IMAGE
OR
LOCAL FEATURE AMOUNT

# FIG. 22A

G71N/G72N

FEATURE EXTRACTOR DN1

CNN
($K_{TH}$ LAYER)

GLOBAL FEATURE
AMOUNT

G711N/G721N

GLOBAL FEATURE
AMOUNT

# FIG. 22B

L71N/L72N

FEATURE EXTRACTOR DN2

CNN
($K_{TH}$ LAYER)

LOCAL FEATURE
AMOUNT

L711N/L721N

LOCAL FEATURE
AMOUNT

# FIG. 23

START

S2301
OUTPUT LEARNED INPUT IMAGE TO PERTURBATION IMAGE CREATING UNIT AND COLOR AND BRIGHTNESS FEATURE EXTRACTION AND CORRECTION UNIT

S2302
GENERATE PERTURBATION IMAGE BY PERTURBATING RESPECTIVE VALUES OF IMAGE AND $\gamma$ VALUE AT RANDOM

S2303
USING FORMULA 15, GENERATE FEATURE EXTRACTOR GN BY OBTAINING FEATURE AMOUNT FGNi OF INPUT IMAGE OR PERTURBATION IMAGE OR GLOBAL FEATURE AMOUNTS G711N, G721N AT FRONT STAGE USING FILTER, AND OBTAIN GLOBAL FEATURE AMOUNTS G711N, G721N AT A CURRENT STAGE BY CALCULATING FILTER COEFFICIENT wgnj AND OFFSET bgni. USING FORMULA 16, GENERATE FEATURE EXTRACTOR LN BY OBTAINING FEATURE AMOUNT FLNi OF INPUT IMAGE OR PERTURBATION IMAGE OR LOCAL FEATURE AMOUNTS L711N, L721N AT FRONT STAGE USING FILTER, AND OBTAIN LOCAL FEATURE AMOUNTS L711N, L721N AT CURRENT STAGE BY CALCULATING FILTER COEFFICIENT wlnj AND OFFSET blni.

S2304
USING FORMULA 17, GENERATE FEATURE EXTRACTOR DN1 BY OBTAINING FEATURE AMOUNT FDNi FROM GLOBAL FEATURE AMOUNTS G71N, G72N USING FILTER, AND OBTAIN GLOBAL FEATURE AMOUNTS G711N, G721N AT CURRENT STAGE BY CALCULATING FILTER COEFFICIENT wdnj AND OFFSET bdni. USING FORMULA 18, GENERATE FEATURE EXTRACTOR DN2 BY OBTAINING FEATURE AMOUNT FENi FROM LOCAL FEATURE AMOUNTS L71N, L72N USING FILTER, AND OBTAIN LOCAL FEATURE AMOUNTS L711N, L721N AT CURRENT STAGE BY CALCULATING FILTER COEFFICIENT wenj AND OFFSET beni.

S2305
IN OVERALL ADJUSTMENT UNITS 73N, 74N, GLOBAL FEATURE AMOUNTS G711N, G721N AND LOCAL FEATURE AMOUNTS L711N, L721N ALREADY CALCULATED?

NO

YES

S2306
USING FORMULA 19, CORRECT GLOBAL FEATURE AMOUNT G711N TO GLOBAL FEATURE AMOUNT G7111N, AND CORRECT GLOBAL FEATURE AMOUNT G721N TO GLOBAL FEATURE AMOUNT G7211N.

S2307
USING FORMULA 6, GENERATE POST CORRECTION COLOR AND BRIGHTNESS FEATURE AMOUNT CFM1 FROM GLOBAL FEATURE AMOUNT G7111N, AND GENERATE POST CORRECTION COLOR AND BRIGHTNESS FEATURE AMOUNT CFM2 FROM GLOBAL FEATURE AMOUNT G7211N. USING FORMULA 7, GENERATE FEATURE EXTRACTOR U1 AND RECONSTITUTED IMAGE 351 FROM POST CORRECTION COLOR AND BRIGHTNESS FEATURE AMOUNT CFM1. USING FORMULA 7, GENERATE FEATURE EXTRACTOR U1 AND RECONSTITUTED IMAGE 352 FROM POST CORRECTION COLOR AND BRIGHTNESS FEATURE AMOUNT CFM2.

S2308
CALCULATE OVERALL COST (cost) USING FORMULA 8 TO FORMULA 12, UPDATE RESPECTIVE FILTER COEFFICIENTS AND RESPECTIVE OFFSET VALUES FROM FORMULA 15 TO FORMULA 19 AND FORMULA 7, AND GENERATE COLOR AND BRIGHTNESS CORRECTOR.

S2309
STORE RESPECTIVE PARAMETERS (RESPECTIVE FILTER COEFFICIENTS, RESPECTIVE OFFSET VALUES AND THE LIKE) FROM FORMULA 15 TO FORMULA 19 AND FORMULA 7 IN MEMORY.

END

# FIG. 24

IMAGE DATA (EX. MOVING IMAGE DATA)

1

CONTROL UNIT ~91

CONNECTED TO RESPECTIVE ELEMENTS

INPUT UNIT ~10

COLOR AND BRIGHTNESS FEATURE EXTRACTION AND CORRECTION UNIT ~18

IMAGE RECONSTITUTION UNIT ~24

FEATURE EXTRACTION UNIT ~16

IDENTIFICATION UNIT ~17

90~ MEMORY

OUTPUT UNIT ~15

IDENTIFICATION RESULT

# FIG. 25

```
                          ┌──────────┐
                          │   START  │
                          └──────────┘
                               │
                               ▼
┌────────────────────────────────────────────────────────────────┐
│ OUTPUT EVALUATION IMAGE TO COLOR AND BRIGHTNESS FEATURE EXTRACTION UNIT │────S2501
└────────────────────────────────────────────────────────────────┘
                               │
                               ▼
┌────────────────────────────────────────────────────────────────┐
│ READ RESPECTIVE PARAMETERS (RESPECTIVE FILTER COEFFICIENTS, RESPECTIVE │
│ OFFSET VALUES) IN FORMULAS 15, 16 FROM MEMORY, AND CALCULATE RESPECTIVE │────S2502
│ GLOBAL FEATURE AMOUNTS G71N AND RESPECTIVE LOCAL FEATURE AMOUNTS L71N. │
└────────────────────────────────────────────────────────────────┘
                               │
                               ▼
┌────────────────────────────────────────────────────────────────┐
│ READ RESPECTIVE PARAMETERS (RESPECTIVE FILTER COEFFICIENTS, RESPECTIVE │
│ OFFSET VALUES) IN FORMULAS 17, 18 FROM MEMORY, AND OBTAIN GLOBAL FEATURE │
│ AMOUNT G711N FROM GLOBAL FEATURE AMOUNT G71N AT ADJUSTMENT UNIT │────S2503
│ 73N AND LOCAL FEATURE AMOUNT L711N FROM LOCAL FEATURE AMOUNT L71N AT │
│ ADJUSTMENT UNIT 74N. │
└────────────────────────────────────────────────────────────────┘
                               │
                               ▼
┌────────────────────────────────────────────────────────────────┐
│ CORRECT GLOBAL FEATURE AMOUNT G711N TO GLOBAL FEATURE AMOUNT │────S2504
│ G7111N USING FORMULA 19. │
└────────────────────────────────────────────────────────────────┘
                               │
                               ▼
┌────────────────────────────────────────────────────────────────┐
│ GENERATE GLOBAL FEATURE AMOUNT G71111N FROM GLOBAL FEATURE AMOUNT │
│ G7111N FROM ABOVE-MENTIONED FORMULA 6, CONNECT GLOBAL FEATURE AMOUNT │
│ G71111N AND LOCAL FEATURE AMOUNT L711N THUS GENERATING POST CORRECTION │
│ COLOR AND BRIGHTNESS FEATURE AMOUNT CFM1. READ PARAMETERS (FILTER │────S2505
│ COEFFICIENTS, OFFSET VALUES) IN FORMULA 7 FROM MEMORY, AND GENERATE │
│ RECONSTITUTED IMAGE 351 FROM POST CORRECTION COLOR AND BRIGHTNESS │
│ FEATURE AMOUNT CFM1. │
└────────────────────────────────────────────────────────────────┘
                               │
                               ▼
┌────────────────────────────────────────────────────────────────┐
│ READ PARAMETERS (FILTER COEFFICIENTS, OFFSET VALUES) IN FORMULA 13 FROM │
│ MEMORY, AND OBTAIN FEATURE AMOUNT FAi OF OBJECT (FOR EXAMPLE, TISSUE, │
│ CELL OR THE LIKE) IN RECONSTITUTED IMAGE 351 USING FILTER BASED ON │────S2506
│ ABOVE-MENTIONED FORMULA 13. │
└────────────────────────────────────────────────────────────────┘
                               │
                               ▼
┌────────────────────────────────────────────────────────────────┐
│ READ PARAMETERS (WEIGHTING w, OFFSET VALUES b AND THE LIKE) IN FORMULA │
│ 14 FROM MEMORY, OBTAIN IDENTIFICATION RESULT FROM FEATURE AMOUNT FAi │
│ BASED ON FORMULA 14, AND CALCULATE IDENTIFICATION VALUE OF LIKENESS OF │────S2507
│ OBJECT (FOR EXAMPLE, LIKENESS OF LESION OR THE LIKE) OF OBJECT IN │
│ RECONSTITUTED IMAGE 351. │
└────────────────────────────────────────────────────────────────┘
                               │
                               ▼
┌────────────────────────────────────────────────────────────────┐
│ STORE CALCULATED IDENTIFICATION RESULT AND IDENTIFICATION VALUE IN MEMORY │────S2508
└────────────────────────────────────────────────────────────────┘
                               │
                               ▼
                          ┌──────────┐
                          │    END   │
                          └──────────┘
```

# FIG. 26

2605

**IMAGE ACQUISITION DEVICE**

2601

IMAGING UNIT

TRANSFER
(INPUT IMAGE)

2603

SERVER

1/2

IMAGE PROCESSING
DEVICE

RECONSTITUTED
IMAGE AND
RESULT OF
IDENTIFICATION

2604

DISPLAY UNIT

TRANSFER
(RECONSTITUTED
IMAGE AND RESULT OF
IDENTIFICATION)

2602

STORAGE UNIT

2600

# FIG. 27

OPERATOR 2703

INPUT
OPERATION

RESPECTIVE
OUTPUTS

2705

**IMAGE ACQUISITION UNIT**

2701

IMAGING UNIT

TRANSFER
(INPUT IMAGE)

SERVER AND THE LIKE

1/2

IMAGE PROCESSING
DEVICE

COLOR AND
BRIGHTNESS
CORRECTOR

2704

STORAGE UNIT

1/2

IMAGE PROCESSING DEVICE

TRANSFER
(COLOR AND BRIGHTNESS
CORRECTOR)

2702

STORAGE UNIT

2700

# EP 4 760 629 A1

## INTERNATIONAL SEARCH REPORT

| | International application No. |
|---|---|
| | **PCT/JP2024/026638** |

| A. | CLASSIFICATION OF SUBJECT MATTER |
|---|---|

*G06T 1/00*(2006.01)i; *G06T 1/40*(2006.01)i; *H04N 1/58*(2006.01)i
FI: G06T1/00 510; G06T1/40; H04N1/58

According to International Patent Classification (IPC) or to both national classification and IPC

| B. | FIELDS SEARCHED |
|---|---|

Minimum documentation searched (classification system followed by classification symbols)

G06T1/00; G06T1/40; H04N1/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Neural Stain Normalization and Unsupervised Classification of Cell Nuclei in Histopatholog ical Breast Cancer Images abstract, 3.1., 3.2., fig. 2 | 1, 3-4, 11, 13-14 |
| A | | 2, 5-10, 12, 15 |
| A | CN 108804878 A (GENOME WISDOM INC.) 13 November 2018 (2018-11-13) entire text, all drawings | 1-15 |
| A | WO 2022/265883 A1 (VENTANA MEDICAL SYSTEMS, INC.) 22 December 2022 (2022-12-22) entire text, all drawings | 1-15 |
| A | CN 115222752 A (ZHEJIANG LAB) 21 October 2022 (2022-10-21) entire text, all drawings | 1-15 |
| A | CN 111564205 A (HUNAN PINXIN BIOENGINEERING CO., LTD.) 21 August 2020 (2020-08-21) entire text, all drawings | 1-15 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2024** | **24 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/026638**

| C. | DOCUMENTS CONSIDERED TO BE RELEVANT | |
|---|---|---|
| Category* | Citation of document, with indication, where appropriate, of the relevant passages | Relevant to claim No. |
| A | CN 116468770 A (CHINA UNIVERSITY OF MINING & TECHNOLOGY) 21 July 2023 (2023-07-21)<br>entire text, all drawings | 1-15 |
| A | CN 111968044 A (SHENYANG INSTITUTE OF AUTOMATION, CHINESE ACADEMY OF SCIENCES) 20 November 2020 (2020-11-20)<br>entire text, all drawings | 1-15 |

Form PCT/ISA/210 (second sheet) (July 2022)

**INTERNATIONAL SEARCH REPORT**
Information on patent family members

International application No.

**PCT/JP2024/026638**

| Patent document cited in search report | | | Publication date (day/month/year) | Patent family member(s) | | | Publication date (day/month/year) |
|---|---|---|---|---|---|---|---|
| CN | 108804878 | A | 13 November 2018 | (Family: none) | | | |
| WO | 2022/265883 | A1 | 22 December 2022 | US | 2024/0112341 | A1 | |
| | | | | CN | 117529750 | A | |
| CN | 115222752 | A | 21 October 2022 | JP | 2024-43567 | A | |
| CN | 111564205 | A | 21 August 2020 | (Family: none) | | | |
| CN | 116468770 | A | 21 July 2023 | (Family: none) | | | |
| CN | 111968044 | A | 20 November 2020 | (Family: none) | | | |

Form PCT/ISA/210 (patent family annex) (July 2022)

**EP 4 760 629 A1**

**Patent documents cited in the description**

- WO 2023130362 A

- WO 2017150194 A